# EUROPEAN PATENT APPLICATION

(11) **EP 1 550 767 A1**
(43) Date of publication of application: **06.07.2005**
(21) Application number: 03792781.1
(22) Date of filing: 21.08.2003
(51) Int. Cl.: D06N 3/00

(54) **LEATHER-LIKE SHEET AND PROCESS FOR PRODUCTION THEREOF**

(30) Priority: 22.08.2002 JP 2002241906; 16.12.2002 JP 2002363495
(71) Applicant: Teijin Cordley Limited, Ooda-shi Shimane 694-0041 (JP)
(72) Inventor: TAKEYAMA, Naohiko c/o Teijin Cordley Limited, Ooda-shi, Shimane 694-0041 (JP); OHHAMA, Daisaku c/o Teijin Cordley Limited, Ooda-shi, Shimane 694-0041 (JP)
(74) Representative: Hallybone, Huw George
(86) International application number: PCT/JP2003/010594
(87) International publication number: WO 2004/018766

(57) **Abstract**

A leather-like sheet product comprising a substrate which contains a bundle of fine fibers, wherein
the substrate comprises (1) a first substrate layer having a structure that it is composed of an elastic polymer and a bundle of fine fibers and the elastic polymer surrounds the fiber bundle and is not existent in the inside space of the fiber bundle and (2) (i) a second substrate layer (A) having a structure that it is composed of (i) a bundle of fine fibers or (ii) a second substrate layer (B) having a structure that it is composed of an elastic polymer and a bundle of fine fibers, the elastic polymer surrounds the fiber bundle and is not existent in the inside space of the fiber bundle, and the total space area of all the voids in the elastic polymer surrounding the fiber bundle is larger than that of the first substrate layer, and (3) the structure of the first substrate layer and the structure of the second substrate layer change continuously in the direction of thickness.

## Description

### Detailed Description of the Invention

### Field of the Invention

The present invention relates to a leather-like sheet product and a production process therefor. More specifically, it relates to a soft grain leather-like sheet product which has a high-quality appearance and yet no stretchy feel on the grain side, a grain artificial leather-like sheet product which has on the grain side a similar touch to natural leather and fine wrinkles on the surface when it is bent and to a production process therefor.

Further, the present invention relates to an artificial leather-like sheet product which is soft and has low resiliency and similar physical properties to natural leather though it has a strong sensation of preventing stretching and to a production process therefor.

### Description of the Prior Art

As a substitute for natural leather, artificial leather composed of fibers and an elastic polymer is widely used as a leather-like sheet product. However, grain artificial leather having a grain side is superior to natural leather in physical properties but unsatisfactory in terms of appearance and feeling.

For example, as grain artificial leather, there are known artificial leather having a porous polyurethane layer formed as a surface layer by wet coagulation on a substrate composed of fine fibers and an elastic polymer (for example, JP-A 8-41786) (the term "JP-A" as used herein means an "unexamined published Japanese patent application") and artificial leather covered with an ordinary solid elastic polymer as a surface layer by lamination or gravure coating.

However, when the porous polyurethane layer formed by wet coagulation is used, the fibers contained in the surface layer are not completely surrounded by the polyurethane and the polyurethane layer cannot prevent the napping of the fibers constituting the substrate completely. In addition, when a thick surface layer is formed to suppress napping and improve physical properties such as adhesion, the obtained artificial leather has a rubber-like feel and buckles significantly.

When the ordinary solid elastic polymer is directly applied to the substrate comprising fibers by lamination or gravure coating, as the elastic polymer and the fibers existent on the surface are bonded to each other, a layer which is composed of the fibers and the elastic polymer, has high density and hardly deforms is formed on the bonding surface, thereby producing a stretchy feel.

Even when the porous polyurethane layer formed by wet coagulation is used, a surface layer specific to wet coagulation is formed on the surface of the layer, thereby making it difficult to obtain gas permeability and moisture permeability. Therefore, the pamphlet of WO94/20665 discloses a method of forming open pores in the surface of artificial leather by applying a good solvent for an elastic polymer forming the surface of a wet type porous layer to the surface. Although a solid layer having open pores on the surface can be formed on this artificial leather, the surface layer formed by the wet process has many pores which are various in shape and size such as a triangle, this porous layer cannot be made thin, and the feel of the elastic polymer prevails. Further, as the open pores are relatively large and the solid layer is thin, the artificial leather is inferior in water pressure resistance.

When the ordinary solid elastic polymer is directly applied to the substrate comprising fibers by lamination or gravure coating, as the elastic polymer and the fibers existent on the surface are bonded to each other, a solid layer which is composed of the fibers and the elastic polymer, has high density and hardly deforms is formed on the bonding surface, thereby producing a stretchy feel and reducing gas permeability and moisture permeability.

Although artificial leather is relatively superior to natural leather in physical properties, it is still inferior to high-grade natural leather in terms of appearance and feeling. Various finishing methods have been studied to achieve a good appearance, and a large number of products similar to natural leather and appearances which cannot be obtained from natural leather have been proposed. Although various studies on feeling have been made and extremely soft products have been proposed, a very soft product having low resiliency and a loose (supple) feel which are the characteristic features of excellent natural leather is not obtained yet.

For example, Japanese Patent No. 3155135 discloses a process for producing a leather-like sheet product by forming a web out of a composite fiber which is made from at least two different high molecular weight polymers and is able to be made fine, needle punching the web in the direction of thickness to form an entangled fibrous base material, impregnating the entangled fibrous base material with an elastic polymer, coagulating the elastic polymer and making fine fibers from the composite fiber constituting the entangled fibrous base material. Although the leather-like sheet product obtained by this process is soft, it has a rubber-like feel with resiliency due to the characteristic properties of the impregnated elastic polymer. Therefore, a very soft sheet product having a loose (supple) feel with low resiliency which is the excellent feel of natural leather cannot be realized.

### Problem to be solved by the Invention

It is therefore a first object of the present invention to provide a soft grain leather-like sheet product having a high-quality appearance which could not be achieved by the above grain leather-like sheet product of the prior art and yet no stretchy feel on the grain side, a grain leather-like sheet product which has on the grain side a similar touch to natural leather and fine wrinkles on the surface when it is bent and a production process therefor.

It is a second object of the present invention to provide a grain leather-like sheet product which has gas permeability, moisture permeability and a high-quality appearance which could not be achieved by the grain leather-like sheet product of the prior art and a production process therefor.

It is a third object of the present invention to provide a leather-like sheet product which has excellent moisture permeability, water pressure resistance and feel which could not be achieved by the leather-like sheet product of the prior art and a production process therefor.

It is a fourth object of the present invention to provide a leather-like sheet product having physical properties similar to natural leather which is soft and has low resiliency though it has a strong sensation of preventing stretching which could not be achieved by the leather-like sheet product of the prior art and a production process therefor.

### Means for Solving the Problems

It has been found from studies conducted by the inventors of the present invention that the above objects of the present invention are attained by the following leather-like sheet product (I) and leather-like sheet product (II).

### Leather-like sheet product (I)

A leather-like sheet product comprising a substrate which contains a bundle of fine fibers, the substrate comprising (1) a first substrate layer having a structure that it is composed of an elastic polymer and a bundle of fine fibers and the elastic polymer surrounds the fiber bundle and is not existent in the inside space of the fiber bundle and (2) a second substrate layer (A) having a structure that it is essentially composed of a bundle of fine fibers, wherein (3) the structure of the first substrate layer and the structure of the second substrate layer (A) change continuously in the direction of thickness.

### Leather-like sheet product (II)

A leather-like sheet product comprising a substrate which contains a bundle of fine fibers, the substrate comprising (1) a first substrate layer having a structure that it is composed of an elastic polymer and a bundle of fine fibers and the elastic polymer surrounds the fiber bundle and is not existent in the inside space of the fiber bundle and (2) a second substrate layer (B) having a structure that it is composed of an elastic polymer and a bundle of fine fibers, the elastic polymer surrounds the fiber bundle and is not existent in the inside space of the fiber bundle, and the total space area of all the voids in the elastic polymer surrounding the fiber bundle is larger than that of the first substrate layer, wherein (3) the structure of the first substrate layer and the structure of the second substrate layer (B) change continuously in the direction of thickness.

The above leather-like sheet products (I) and (II) of the present invention are the same in that they comprise the first substrate layer and the second substrate layer and that the structures of their first substrate layers are identical to each other. That is, the first substrate layer is composed of an elastic polymer and a bundle of fine fibers, and the elastic polymer surrounds the fiber bundle and is not existent in the inside space of the fiber bundle.

The structure of this first substrate layer can be judged from an electron microphotograph of the section of the leather-like sheet product when cut in a direction perpendicular to the surface of the sheet product.

A detailed description is subsequently given of the structures and production processes of the leather-like sheet products (I) and (II) of the present invention. The leather-like sheet product (I) is first described before the leather-like sheet product (II).

The following terms mean the following in this text.

### (i) leather-like sheet product or sheet product

It is composed of a bundle of fine fibers and an elastic polymer and comprises a first substrate layer and a second substrate layer of the present invention. Therefore, it includes the leather-like sheet products (I) and (II). It also includes what has or does not have a surface layer on the surface of the first substrate layer.

### (ii) fiber sheet

This means a sheet composed of a fine fiber-forming sea-island type fiber consisting of two or more components which differ from each other in solvent solubility. The sheet is, for example, a nonwoven fabric composed of a sea-island type fiber and not impregnated with an elastic polymer. The sea-island type fiber is not made fine.

### 1) structure and production process of leather-like sheet product (I)

The leather-like sheet product (I) has the following features (1) to (3).

It comprises (1) a first substrate layer having a structure that it is composed of an elastic polymer and a bundle of fine fibers and the elastic polymer surrounds the fiber bundle and is not existent in the inside space of the fiber bundle and (2) a second substrate layer (A) having a structure that it is essentially composed of a bundle of fine fibers, wherein (3) the structure of the first substrate layer and the structure of the second substrate layer (A) change continuously in the direction of thickness.

The above leather-like sheet product (I) (may be referred to as "sheet product (I)" hereinafter) is a sheet product which is composed of a bundle of fine fibers and an elastic polymer and has an impregnated layer in which the elastic polymer exists on one side of the sheet product as a layer and a non-impregnated layer in which the elastic polymer does not exist. The impregnated layer and the non-impregnated layer can be identified from a microphotograph of the section of the sheet product when cut in a direction perpendicular to the surface of the sheet product. The impregnated layer of this sheet product (I) has a structure that fine fibers exist as an assembly and that the elastic polymer surrounds the assembly and is not existent in the inside space of the assembly. Meanwhile, as the elastic polymer does not exist in the non-impregnated layer, the layer is essentially composed of a bundle of fine fibers.

The fine fibers forming the bundle of fine fibers in the sheet product (I) have a fineness of 0.2 dtex or less, preferably 0.1 dtex or less, particularly preferably 0.0001 to 0.05 dtex. Examples of the fine fibers include polyester fibers such as polyethylene terephthalate and polybutylene terephthalate fibers and polyamide fibers such as nylon 6, nylon 66 and nylon 12 fibers. The fiber must exist as an assembled fine fiber which a bundle of fine fibers is assembled in the sheet product (I) of the present invention. The assembled fine fibers are, for example, fine fibers obtained by dissolving and removing the sea component of a multi-component fiber formed by spinning a polymer composition consisting of two or more components which differ from each other in solvent solubility by composite spinning or blend spinning as a sea-island type fiber. The fine fibers form a bundle and one bundle consists of preferably 10 to 5,000 fine fibers, more preferably 100 to 2,000 fine fibers.

The sheet product (I) of the present invention is composed of a bundle of fine fibers and an elastic polymer whereas the fiber sheet essentially composed of fine fibers to be impregnated with an elastic polymer may contain fine fibers partially and may not be composed of fine fibers alone. This substrate may be a woven fabric but preferably essentially composed of a nonwoven fabric and partially contains or does not contain a woven fabric as a reinforcement to improve its feel.

Examples of the elastic polymer used in the leather-like sheet product (I) of the present invention include polyurethane resin elastomer, polyurea elastomer, polyurethane resin·polyurea elastomer, polyacrylic acid resin, acrylonitrile·butadiene elastomer and styrene·butadiene elastomer. Out of these, polyurethane resin-based polymers such as polyurethane resin elastomer, polyurea elastomer and polyurethane resin·polyurea elastomer are preferred.

The elastic polymer existent in the first substrate layer (impregnated layer) has a 100 % elastic modulus of preferably 200 to 5,000 N/cm², more preferably 300 to 4,000 N/cm², particularly preferably 400 to 3,000 N/cm². When the 100 % elastic modulus is lower than 200 N/cm², the obtained substrate is very soft but may be inferior in heat resistance and solvent resistance. When the 100 % elastic modulus is higher than 5,000 N/cm², the obtained sheet product may have a hard feel. As means of adjusting the 100 % elastic modulus of the elastic polymer to a preferred range, for example, when a polyurethane resin elastomer is used, the 100 % elastic modulus can be easily adjusted by controlling the content of an organic diisocyanate in the polymer and the amount of a chain extender.

The elastic polymer of the first substrate layer (impregnated layer) is preferably solid or independently porous. When it is a continuously porous polymer obtained by wet coagulation, its effect of preventing the stretching of the obtained leather-like sheet product tends to lower.

The leather-like sheet product (I) of the present invention comprises the first substrate layer (impregnated layer) in which the elastic polymer is existent up to a depth of 25 µm or more from one side and the second substrate layer (A) (non-impregnated layer) in which the elastic polymer is not existent. The thickness of the first substrate layer (impregnated layer) is preferably 25 to 300 µm, more preferably 50 to 250 µm, most preferably 75 to 200 µm from the surface. When the layer in which the elastic polymer is existent is thin, the strength of the obtained sheet product becomes low and the stretching preventing property during processing deteriorates with the result that the layer may elongate in the longitudinal direction. When the layer is thick, the obtained sheet product becomes strong with a tight feel but tends to become hard. Particularly when the elastic polymer of the impregnated layer having an excellent stretching preventing property is solid or independently porous, the obtained sheet product is apt to become harder than when a continuously porous elastic polymer is used. Therefore, the impregnated layer must be made thin.

The weight ratio of the fiber to the elastic polymer in the first substrate layer (impregnated layer) is in the range of preferably 5:95 to 95:5, more preferably 10:90 to 50:50, particularly preferably 15:85 to 40:60. When the percentage of the elastic polymer is small, the strength of the obtained sheet product tends to lower. When the percentage of the elastic polymer is large, the feel of the obtained sheet product becomes hard. Particularly when the elastic polymer is solid, a sheet product which has high resiliency due to its characteristic properties may be obtained.

The leather-like sheet product (I) of the present invention comprises a non-impregnated layer which is the second substrate layer (A) essentially composed of a fiber and containing no elastic polymer. In the present invention, the stress distributions of the front and rear surfaces are graded and well balanced by the existence of the second substrate layer (A) to obtain a product which has low resiliency and an excellent feel. Further, the weight of the fiber in the second substrate layer (A) is in the range of preferably 30 to 500 g/m², more preferably 40 to 400 g/m², particularly preferably 50 to 300 g/m². When the weight of the second substrate layer (A) is low, the obtained leather-like sheet product has almost the same characteristic properties as the leather-like sheet product of the prior art and it may be difficult to obtain both the stretching preventing property and softness. When the weight of the second substrate layer (A) is too high, there is no difference in weight between it and the nonwoven fabric and the stretching preventing property tends to deteriorate.

The leather-like sheet product (I) of the present invention comprises an impregnated layer which is the above first substrate layer and a non-impregnated layer which is the second substrate layer (A). The most characterizing feature of the sheet product is a structure that fine fibers are existent as a fiber bundle in the first substrate layer and the elastic polymer surrounds the fiber bundle and is not existent in the inside space of the fiber bundle.

When the fine fibers penetrate in the impregnated layer as fine single fibers and not as a fiber bundle unlike the present invention, the fine single fibers are densely existent in the elastic polymer and the elastic polymer reinforced by the fine single fibers is apt to become hard and rarely deform. Even when the fiber and the elastic polymer are not bonded to each other by some means, if the fiber penetrates in the impregnated layer as a fine single fiber, the distance between the fine fiber and the elastic polymer is short, the degree of freedom of the fiber is low, and a very hard layer structure may be formed. In contrast to this, when fine fibers are existent as a fiber bundle as in the present invention, as the density of the fine fibers in the fiber bundle becomes high, the space between fine fibers becomes large as compared with the total weight of all the fine fibers, the elastic polymer is existent as a large mass, develops its high elastic property and easily deforms. In the present invention, as the elastic polymer surrounds the fiber bundle and is not existent in the inside space of the fiber bundle, a softer structure having a large distance between the bundle of fine fibers and the elastic polymer and a high degree of freedom of the fiber bundle is obtained, thereby realizing a soft feel.

Since the elastic polymer surrounds the fiber bundle in the leather-like sheet product (I) of the present invention, when the sheet product slightly deforms, only the elastic polymer deforms and small stress is produced. When the sheet product deforms more, this deformation is transmitted to the fiber bundle which is a reinforced fiber and large stress is produced. To cause this phenomenon, the fiber bundle must be completely surrounded by the elastic polymer and preferably has an almost circular section if possible. For example, if the elastic polymer around the fiber bundle cracks or if there is a portion or direction where stress is hardly transmitted to the fiber bundle in the space around the fiber bundle, the combined effect of the fiber bundle and the elastic polymer will be obtained only when the sheet product greatly deforms.

Further, the bundle of fine fibers accounts for preferably 40 to 80 %, more preferably 45 to 70 %, most preferably 45 to 60 % of the total space area of all the voids in the elastic polymer surrounding the fiber bundle in the section perpendicular to the surface of the leather-like sheet product (I). When the total space of all the voids around the fiber bundle is too large, stress is hardly transmitted to the fiber bundle and the sensation of preventing stretching may be small. When the total space is too small, the obtained sheet product tends to become hard. To enable the fiber bundle and the elastic polymer to take this structure, the first substrate layer composed of the bundle of fine fibers and the elastic polymer is preferably a solid layer or independent porous structure in which voids are not continuous.

The leather-like sheet product (I) of the present invention is very soft and has low resiliency due to its structure. The bending recovery percentage which is an index of low resiliency of the sheet product is preferably 75 % or less, more preferably 60 % or less, most preferably 55 % or less. The bending recovery percentage is obtained by placing a 1 cm-wide sample in such a manner that its impregnated layer faces down, bending its 1 cm end portion at 180°, leaving it under a load of 9.8 N for 1 hour, removing the load and measuring its recovery percentage after 30 seconds. When the sample returns to its original state, its bending recovery percentage is 100 % and when it remains as it is, its bending recovery percentage is 0 %. As the bending recovery percentage is smaller, the sample is softer and has lower resiliency.

It is also preferred that the leather-like sheet product (I) of the present invention should have a suede-like or nubuck-like appearance with a grain layer or a nap on the surface. The grain leather-like sheet product is a leather-like sheet product having a structure that the first substrate layer is existent on one surface side of the sheet product and this surface is a grained surface, and the napped leather-like sheet product is a leather-like sheet product having a structure that the first substrate layer is existent on one surface side of the sheet product and the topmost surface on the side is a napped layer of fine fibers.

The leather-like sheet product (I) of the present invention can be obtained by the following production process. That is, (i) a process comprising the steps of applying an elastic polymer solution to one side of a fiber sheet substantially composed of a fine fiber-forming sea-island type fiber consisting of two or more components which differs from each other in solvent solubility to form an impregnated layer, coagulating the elastic polymer and dissolving and removing the sea component by using a solvent which can dissolve the sea component of the sea-island type fiber, or (ii) a process comprising the steps of applying an elastic polymer solution to a fiber sheet composed of a fine fiber-forming sea-island type fiber consisting of two or more components which differ from each other in solvent solubility in such a manner that a non-impregnated layer is formed in the center between the both surfaces of the sheet to form impregnated layers, coagulating the elastic polymer, dissolving and removing the sea component by using a solvent which can dissolve the sea component of the sea-island type fiber, and slicing the sheet into two at the non-impregnated layer portion.

By one of the above processes (i) and (ii), there can be produced the leather-like sheet product (I) which is soft, has low resiliency and comprises the first substrate layer having a structure that fine fibers are existent as a fiber bundle and the elastic polymer surrounds the fiber bundle and is not existent in the inside space of the fiber bundle and the second substrate layer (A) having a structure that it is substantially composed of fine fibers.

The fine fiber-forming sea-island type fiber consisting of two or more components which differ from each other in solvent solubility is, for example, a sea-island type fiber obtained by spinning a polymer composition consisting of two or more components which differs from each other in solvent solubility by composite spinning or blend spinning. The fineness of the island component which does not need to be particularly specified is preferably 0.2 dtex or less, more preferably 0.1 dtex or less, particularly preferably 0.0001 to 0.05 dtex.

As for a preferred combination of the two or more components which differ from each other in solvent solubility of the polymer composition, when a polyester such as polyethylene terephthalate or polybutylene terephthalate is selected as an insoluble component, a polyolefin such as polyethylene, polypropylene or polystyrene is preferably used as a soluble component and when a polyamide such as nylon 6, nylon 66 or nylon 12 is selected as an insoluble component, a polyester or polyolefin is preferably used as a soluble component.

The fiber sheet substantially composed of the above fine fiber-forming sea-island type fiber is not particularly limited if it is a sheet and may be a knitted fabric or nonwoven fabric but preferably essentially composed of a nonwoven fabric from the viewpoint of feeling. For example, to obtain a nonwoven fabric from fibers, a known card, layer, needle rocker or fluid entangling machine may be used to produce a finely entangled nonwoven fabric having a high density of entangled fibers.

Prior to the application of an elastic polymer solution to the nonwoven fabric fiber sheet obtained by entangling fibers, the surface of the sheet composed of a sea-island type fiber is preferably pressed at a temperature equal to or higher than the softening temperature of the sea component constituting the sea-island type fiber and lower than the softening temperature of the island component to adjust the thickness and surface of the sheet. By adjusting the thickness of the sheet, the thickness of the finally obtained product can be controlled. Further, by adjusting the surface of the sheet, the surface flatness of the product can be controlled as well. By adjusting heating and pressure conditions, the infiltration of the elastic polymer solution can be controlled. When the adjusted surface forms a film by fusion, the elastic polymer solution is rarely infiltrated and when a film is not formed by fusion and the fiber density of the topmost surface is low, the elastic polymer solution is well infiltrated into the sheet.

In the present invention, an impregnated layer containing the elastic polymer surrounding the sea-island type fiber without a space therebetween must be formed in an area from one adjusted surface to a depth of 25 to 300 µm of the obtained fiber sheet composed of a fine fiber-forming sea-island type fiber. For example, the thickness of the impregnated layer is adjusted by controlling the infiltration of the elastic polymer solution into the fiber sheet.

Independent bubbles such as air bubbles may be partially existent around the fiber but it is basically preferred that there should be no space between the sea-island type fiber and the elastic polymer. When there is a space therebetween, the elastic polymer cannot surround the bundle of fine fibers completely in the end. It is more preferred that the fiber and the elastic polymer should not be bonded to each other and that there should be no space therebetween.

To form this impregnated layer, the process for coagulating the elastic polymer solution is preferably a dry process. For example, a coating technique for applying the elastic polymer to the fiber sheet directly or a lamination technique for applying the elastic polymer solution to a transfer sheet and impregnating a fiber sheet with an adhesive layer may be used. Preferably, an organic solvent solution or dispersion (including an aqueous emulsion) of the elastic polymer is applied to one side of the fiber sheet to be fully infiltrated into the fiber sheet and coagulated by heating and drying. To adjust the depth of the impregnated layer, the number of times of application is preferably more than one. For example, the solution or dispersion is applied 2 to 5 times and dried to increase the amount of the elastic polymer impregnated into a portion near the surface layer and improve the feeling of the fiber sheet.

The concentration of the elastic polymer solution to be applied is preferably 5 to 50 wt%, more preferably 7 to 30 wt% , most preferably 10 to 20 wt% . When the concentration is lower than 5 wt%, the viscosity of the elastic polymer solution becomes too low, whereby it is infiltrated into the base material too much or flows over the surface of the fiber sheet, thereby making it impossible to infiltrate the solution into the fiber sheet uniformly and difficult to process the obtained fiber sheet. Even when it can be applied properly, the impregnated layer is often as thick as 25 µm or less from one side of the fiber sheet. As the concentration of the solution becomes higher, the viscosity of the elastic polymer solution tends to become higher, the viscosity and the infiltration of the solution into the fiber sheet cannot be well balanced, and it is difficult to apply the elastic polymer uniformly. Particularly when the concentration is too high, the amount of the elastic polymer becomes too large, whereby the obtained product may have high resiliency and a tight feel and it is difficult to obtain a soft, low-resiliency sheet product which the present invention is directed to.

The infiltration of the elastic polymer solution into the fiber sheet can be controlled by the viscosity and surface tension of the elastic polymer solution applied herein. The viscosity of the elastic polymer solution can be controlled by adjusting its concentration or using a general thickener. The surface tension of the elastic polymer solution can be controlled by adding various additives to the solution.

In the present invention, the impregnated layer existent surface is preferably given a suitable leather-like appearance and a surface layer may be formed to this end. Any known process may be employed to form the surface layer.

In the production process, a solvent which dissolves the sea component of the sea-island type fiber is used to remove the sea component. This solvent must not dissolve the island component of the fine fiber, may dissolve a small amount of the elastic polymer used in the impregnated layer and preferably does not dissolve the elastic polymer if possible. By removing the sea component of the sea-island type fiber, the elastic polymer is not bonded to the fine fiber consisting of the island component in the impregnated layer. Stated more specifically, for example, when nylon is used as the island component and polyethylene is used as the sea component, toluene is preferably used. In order to increase extraction efficiency, it is preferred to use a heated solvent.

In the production process of the present invention, there is also proposed a process comprising the steps of forming an impregnated layer comprising the elastic polymer surrounding the sea-island type fiber without a space therebetween in areas from the both surfaces to a depth of 25 to 300 µm of a fiber sheet composed of a fine fiber-forming sea-island type fiber consisting of two or more components which differ from each other in solvent solubility, dissolving and removing the sea component by using a solvent which can dissolve the sea component of the sea-island type fiber, and slicing the sheet at the center portion (non-impregnated layer) in the direction of thickness.

High productivity and high stable processability for a thin sheet are obtained by this slicing. In the process for producing a thin leather-like sheet product of the present invention by using only a half portion of the fiber sheet, a processing problem such as wrinkling due to the softness of the fiber sheet or elongation caused by mechanical tension tends to occur in the step of removing the sea component by using the solvent which dissolves the sea component of the sea-island type fiber. A fiber sheet impregnated with a resin on both sides does not wrinkle and has stable processability. Since there is no non-impregnated portion in contact with the surface of a roll under processing in the both-side impregnation process, the obtained product rarely has a nap on the surface and process stability tends to be high.

A leather-like sheet product having a nap on the surface as an example of the thus obtained leather-like sheet product (I) can be obtained by napping by gravure coating the impregnated layer existent surface with the elastic polymer and buffing and optionally applying a dye or softening agent to be rubbed.

A leather-like sheet product having a grain layer on the surface as another example of the obtained leather-like sheet product (I) can be obtained by forming an elastic polymer surface layer having a suitable leather-like appearance on the impregnated layer existent surface. Any known method may be employed to form the surface layer. For example, a solution or dispersion of the elastic polymer is laminated with or coated on the sheet product to form a grain surface layer. It is also preferred to gravure coat the thus obtained grain surface with the elastic polymer or to emboss the grain surface as required to further adjust the topmost surface.

In the production process of the present invention, it is preferred to rub the thus obtained sheet product. To rub the sheet product, it is held by clamps and one of the clamps is driven to deform the sheet by rubbing, or it is let pass between stays having two combined projections to be unbind by rubbing while the projections are forced into the sheet product.

The thus obtained leather-like sheet product (I) of the present invention has a strong sensation of preventing stretching, low resiliency and a very soft loose feel which are the features of natural leather and cannot be obtained from the leather-like sheet product of the prior art.

### 2) structure and production process of leather-like sheet product (II)

The leather-like sheet product (II) has the following features (1) to (3).

It comprises (1) a first substrate layer having a structure that it is composed of an elastic polymer and a bundle of fine fibers and the elastic polymer surrounds the fiber bundle and is not existent in the inside space of the fiber bundle and (2) a second substrate layer (B) having a structure that it is composed of an elastic polymer and a bundle of fine fibers, the elastic polymer surrounds the fiber bundle and is not existent in the inside space of the fiber bundle, and the total space area of all the voids in the elastic polymer surrounding the fiber bundle is larger than that of the first substrate layer, wherein (3) the structure of the first substrate layer and the structure of the second substrate layer (B) change continuously in the direction of thickness.

The above leather-like sheet product (II) (to be referred to as "sheet product (II)" hereinafter) comprises the first substrate layer having a structure that the elastic polymer surrounds the bundle of fine fibers and is not existent in the inside space of the fiber bundle and the second substrate layer (B) having a structure that the elastic polymer surrounds the bundle of fine fibers and is not existent in the inside space of the fiber bundle and the total space area of all the voids in the elastic polymer surrounding the fiber bundle is larger than that of the first substrate layer.

The total space area of all the voids in the elastic polymer surrounding the bundle of fine fibers in the first substrate layer and the second substrate layer (B) can be known from a microphotograph of the section of the sheet product when cut in a direction perpendicular to the surface of the sheet product. That is, although the bundle of fine fibers is surrounded by the elastic polymer in the first substrate layer and the second substrate layer (B), the area ratio of the bundle of fine fibers to the total space of all the voids in the second substrate layer (B) is larger than that of the first substrate layer. In other words, the ratio of the area of the bundle of fine fibers to the total space area of all the voids in the elastic polymer surrounding the bundle of fine fibers in the second substrate layer (B) is smaller than that of the first substrate layer.

The bundles of fine fibers forming the first substrate layer and the second substrate layer (B) in the leather-like sheet product (II) of the present invention are formed by dissolving and removing the sea component from the fine fiber-forming sea-island type fiber consisting of two or more components which differs from each other in solvent solubility by using a solvent which dissolves the sea component as obvious from the process for producing a leather-like sheet product which will be described in detail hereinafter.

The fineness and type of the fiber forming the bundle of fine fibers in the leather-like sheet product (II) are substantially the same as those of the above-described sheet product (I). That is, the fiber forming the bundle of fine fibers in the sheet product (II) has a fineness of 0.2 dtex or less, preferably 0.1 dtex or less, particularly preferably 0.0001 to 0.05 dtex. Examples of the fine fiber include polyester fibers such as polyethylene terephthalate and polybutylene terephthalate fibers; and polyamide fibers such as nylon 6, nylon 66 and nylon 12 fibers. The fiber must exist as a bundle of fine fibers. The assembled fine fibers are, for example, fine fibers obtained by dissolving and removing the sea component of a multi-component fiber formed by spinning a polymer composition consisting of two or more components which differ from each other in solvent solubility as a sea-island type fiber by composite spinning or blend spinning. The fine fibers form a bundle and one bundle consists of preferably 10 to 5,000 fine fibers, more preferably 100 to 2,000 fine fibers.

The sheet comprising a bundle of fine fibers is not particularly limited if it is a sheet product comprising the above bundle of fine fibers, and not all but some of the fibers may each consist of a bundle of fine fibers. This substrate may be a woven fabric but preferably essentially composed of a nonwoven fabric and partially contains or does not contain a woven fabric as a reinforcement to improve its feel.

The second substrate layer (B) of the sheet product (II) is preferably a sheet product comprising the elastic polymer filled in the fiber bundle. In this case, the amount of the elastic polymer filled in the fiber is preferably 30 to 80 wt%, most preferably 40 to 60 wt%.

Examples of the elastic polymer to be filled include polyurethane elastomer, polyurea elastomer, polyurethane·polyurea elastomer, polyacrylic acid resin, acrylonitrile·butadiene elastomer and styrene·butadiene elastomer. Out of these, polyurethane-based polymers such as polyurethane elastomer, polyurea elastomer and polyurethane·polyurea elastomer are preferred.

The elastic polymer of the second substrate layer (B) may be the same as or different from the elastic polymer of the first substrate layer which will be described hereinafter but preferably a porous elastic polymer different from the elastic polymer of the first substrate layer. That is, the second substrate layer (B) is composed of a bundle of fine fibers and an elastic polymer which is most preferably a porous polyurethane prepared by wet coagulation.

The 100 % elongation modulus of the elastic polymer used in the above second substrate layer (B) is preferably 390 to 3,000 N/cm². When the 100 % elongation modulus is lower than 390 N/cm², the obtained sheet product is very soft but may be inferior in heat resistance and solvent resistance. When the 100 % elongation modulus is higher than 3,000 N/cm², the obtained sheet product may have a hard feel. To adjust the 100 % elongation modulus of the elastic polymer to a preferred range, for example, when a polyurethane elastomer is used, the 100 % elongation modulus can be easily controlled by adjusting the content of an organic diisocyanate in the polymer and the amount of a chain extender.

The leather-like sheet product (II) of the present invention has the first substrate layer on the front surface side of the second substrate layer (B). Examples of the elastic polymer used in the first substrate layer include polyurethane elastomer, polyurea elastomer, polyurethane·polyurea elastomer, polyacrylic acid resin, acrylonitrile·butadiene elastomer and styrene·butadiene elastomer. Out of these, polyurethane-based polymers such as polyurethane elastomer, polyurea elastomer and polyurethane·polyurea elastomer are preferred. The 100 % elongation modulus of the elongation polymer is preferably 390 to 1,500 N/cm². When the 100 % elongation modulus is lower than 390 N/cm², the obtained leather-like sheet product is very soft but may be inferior in abrasion resistance, heat resistance and solvent resistance. When the 100 % elongation modulus is higher than 1,500 N/cm², the obtained leather-like sheet product may have a hard feel and may be inferior in flexing resistance and hardness at a low temperature.

The elastic polymer used in the first substrate layer preferably has high solvent resistance. More specifically, it has a weight reduction of preferably 15 wt% or less, more preferably 10 wt% or less, most preferably 7 wt% or less after it is immersed in toluene heated at 80°C for 3 minutes.

The elastic polymer used in the first substrate layer preferably has DMF dissolubility in addition to toluene dissolubility as solvent resistance. The elastic polymer is, for example, a crosslinked elastic polymer such as a two-liquid type polyurethane. When the elastic polymer has DMF dissolubility, wet polyurethane resin dissolved in DMF may be treated in any stage to reinforce the second substrate layer.

The most characterizing feature of the leather-like sheet product (II) of the present invention which comprises the first substrate layer and the second substrate layer (B) is that fine fibers are existent as a fiber bundle and the elastic polymer surrounds the fiber bundle and is not existent in the inside space of the fiber bundle in the first substrate layer and the second substrate layer (B). On the contrary, when the fine fibers are directly existent as fine single fibers and not as a fiber bundle, the fine single fibers are densely existent between elastic polymer portions and the elastic polymer reinforced with the fine single fibers hardly deforms. The distance between the fine single fiber and the elastic polymer is short and the fiber and the elastic polymer have a low degree of freedom, whereby a solid layer structure is apt to be formed. In contrast to this, when the fine fibers are existent as a fiber bundle, the elastic polymer surrounds the fiber bundle and is not existent in the inside space of the fiber bundle, whereby the space between fibers is large as compared with the weight of the fiber, and the elastic polymer not reinforced with the fiber is existent as a relatively large mass, develops its high elastic property and easily deforms. A softer structure having a large distance between the fine fiber and the elastic polymer and a high degree of freedom of the fiber is obtained, thereby realizing a soft feel.

Since the elastic polymer surrounds the fiber bundle in the sheet product (II) of the present invention, when the sheet product (II) slightly deforms, only the elastic polymer deforms and small stress is produced. When the sheet product (II) greatly deforms, this deformation is transmitted to the fiber bundle surrounded by the elastic polymer which is a reinforced fiber and large stress is produced. To cause this phenomenon, the fiber bundle must be completely surrounded by the elastic polymer and preferably has an almost circular section if possible. For example, if the elastic polymer around the fiber bundle cracks or if there is a portion or direction where stress is hardly transmitted to the fiber bundle in the space around the fiber bundle, the combined effect of the fiber and the elastic polymer will be obtained only when the elastic polymer greatly deforms.

In the section perpendicular to the surface of the sheet product (II), the bundle of fine fibers accounts for preferably 40 to 80 %, more preferably 45 to 70 %, most preferably 45 to 60 % of the total space area of all the voids in the elastic polymer surrounding the fiber bundle in the first substrate layer.

In the section perpendicular to the surface of the sheet product (II), the area ratio of the fiber bundle to the total space of all the voids in the elastic polymer surrounding the fiber bundle in the second substrate layer (B) is preferably smaller than that of the first substrate layer. The fiber bundle accounts for preferably less than 40 %, particularly preferably 35 % or less of the total space area of all the voids in the elastic polymer. When the total space of all the voids around the fiber bundle is too large, stress may be hardly transmitted to the fiber bundle and the obtained sheet product may have a low sensation of preventing stretching and when the total space of all the voids is too small, the obtained sheet product may become hard.

The density of the first substrate layer of the leather-like sheet product (II) of the present invention is preferably 0.6 g/cm³ or more, more preferably 0.8 g/cm³ or more, most preferably 1.0 g/cm³ or more. The upper limit of density which depends on the density of the elastic polymer is generally 1.4 g/cm³ or less. When the density is too low, the elastic polymer readily deforms more than required and the obtained sheet product may have a low sensation of preventing stretching. The thickness of the first substrate layer is preferably 10 to 200 µm, most preferably 20 to 100 µm. When the first substrate layer has a low density and a small thickness, surface physical properties may deteriorate and when the first substrate layer has a high density and a large thickness, the obtained sheet product impairs its high-grade appearance such as finely wrinkles, when it is bent.

The first substrate layer of the sheet product (II) of the present invention may have a thin surface layer on the surface which can prevent the formation of a napped layer of fine fibers on the surface.

All or part of the surface layer is preferably made of a crosslinked polymer. By using the crosslinked polymer, the surface strength and solvent resistance of the surface layer can be improved.

A description is subsequently given of the process for producing the leather-like sheet product (II) of the present invention. The leather-like sheet product (II) can be produced by impregnating a fiber sheet composed of a fine fiber forming sea-island type fiber consisting of two or more components which differ from one another in solvent solubility with a solution of an elastic polymer (a), coagulating the elastic polymer to obtain a sheet material, forming a surface layer made of an elastic polymer (b) which surrounds the sea-island type fiber in the surface layer of the sheet material without a space therebetween on the surface of the sheet material, and dissolving and removing the sea component by using a solvent which can dissolve the sea component of the sea-island type fiber.

The fiber sheet composed of the fine fiber forming sea-island type fiber is identical to what has been described in the process for producing the above sheet product (I) and therefore, its description is omitted.

The sheet material is manufactured by impregnating the fiber sheet with the solution of the elastic polymer (a) and coagulating the elastic polymer (a). The second substrate layer (B) is formed by the coagulation of this elastic polymer (a). Then, the surface layer made of the elastic polymer (b) which surrounds the sea-island type fiber in the surface layer of the sheet material without a space therebetween is formed on the surface of the sheet material. This surface layer becomes the first substrate layer by dissolving and removing the sea component in the following step.

The elastic polymer (a) to be impregnated into the fiber sheet is preferably changed into a porous elastic polymer, most preferably a porous elastic polymer having a density of 0.5 g/cm³ or less as obtained by a known polyurethane wet coagulation method.

In the production process of the present invention, the surface layer made of the elastic polymer (b) which surrounds the sea-island type fiber without a space therebetween must be formed on the substrate comprising the fine forming sea-island type fiber. Independent pores such as air bubbles may be partially existent around the fiber but it is basically preferred that there should be no space between the sea-island type fiber and the elastic polymer. When there is a space between the sea-island type fiber and elastic polymer, the elastic polymer (b) cannot surround the bundle of fine fibers completely in the end. It is more preferred that the fiber and the elastic polymer should not be bonded to each other and that there should be no space therebetween.

To form the surface layer, a solution or dispersion of the elastic polymer (b) is laminated with or coated on the base material. Most preferably, it is laminated with the base material. Stated more specifically, for example, a solution of the elastic polymer (b) is cast over release paper and dried to form a film, a solution of the elastic polymer which will become an adhesive layer thereafter is applied to the release paper again and laminated with the base material before the solution becomes dry, and dried and bonded to the base material by heating. In this case, the surface layer consists of a layer containing the sea-island type fiber and a layer containing no sea-island type fiber. Even when the surface layer is thin, a napped layer of the fiber is not exposed to the surface advantageously.

The elastic polymer (b) used in the first substrate layer of the present invention may be identical to the elastic polymer (a) preferably used to form the above second substrate layer. The elastic polymer (b) preferably has a 100 % elongation modulus of 390 to 1,500 N/cm². When the 100 % elongation modulus is low, the obtained leather-like sheet product (II) is very soft but may be inferior in abrasion resistance, heat resistance and solvent resistance. When the 100 % elongation modulus is high, the obtained leather-like sheet (II) may have a hard feel and may be inferior in flexing resistance and hardness at a low temperature.

The elastic polymers (a) and (b) preferably have a weight reduction of 15 wt% or less after they are immersed in a solvent which can dissolve only the sea component of the sea-island type fiber as used in the later step. The weight reduction is more preferably 10 wt% or less, most preferably 7 wt% or less. As the weight reduction becomes smaller, the surface appearance after the treatment may become better. When the weight reduction is too large, a dissolution phenomenon occurs in the solvent which dissolves only the sea component of the sea-island type fiber, thereby making it difficult to maintain the surface appearance of the sheet product.

It is preferred to use an elastic polymer as the elastic polymer (b) which expands in the solvent which dissolves only the sea component of the sea-island type fiber at an area expansion coefficient of 2 to 160 % and returns to almost its original form at an area change rate of 5 % or less when the solvent is removed. Since part or most of a portion having a low molecular weight or a portion having solubility in the solvent of the elastic polymer having a large area expansion coefficient in the solvent which can dissolve the sea component of the sea-island fiber is dissolved in the solvent, the shape of the film may not be able to be maintained. When the above phenomenon does not occur and the elastic polymer has a large area expansion coefficient in the solvent which dissolves only the sea component of the sea-island type fiber, the elastic polymer greatly deforms at the time of its expansion, and the marks of wrinkles remain on the surface at random after the treatment with the result that an unstable sheet product having a poor appearance may be obtained.

To obtain the weight reduction and area expansion coefficient, a 200 µm-thick film of the elastic polymer is formed and immersed in the solvent which can dissolve the sea component of the sea-island type fiber for 3 minutes to measure its area and dry weight. For example, when polyethylene is used as the sea component, toluene is used as the solvent for measurement. The measurement temperature may be a temperature at the time of the treatment. For example, when hot toluene is used, 80°C is suitable.

In the production process of the present invention, the sea component is then removed by using the solvent which dissolves the sea component of the sea-island type fiber. The solvent must not dissolve the island component of the fine fiber and may dissolve a small amount of the elastic polymer but preferably does not dissolve it if possible. By removing the sea component of the sea-island type fiber, the elastic polymer is not bonded to the bundle of fine fibers which are composed of the island component. Stated more specifically, for example, when nylon is used as the island component and polyethylene is used as the sea component, toluene is preferably used. To enhance extraction efficiency, it is also preferred to use a heated solvent.

It is preferred that the sheet material portion should be shrunk from its original area when the sea component of the sea-island type fiber is removed. The shrinkage of the sheet material portion can be controlled by the density of a nonwoven fabric constituting the sheet material and the modulus and amount of the elastic polymer impregnated into the nonwoven fabric. When the density of the nonwoven fabric is low, the modulus of the elastic polymer is low and the amount of the elastic polymer is small, the sheet material portion tends to greatly shrink. On the contrary, when the density of the nonwoven fabric is high, the modulus of the elastic polymer is high and the amount of the elastic polymer is large, the sheet material portion tends to hardly shrink. The sheet material portion is preferably shrunk by 2 to 20 % of its original area by optimizing these conditions. It is shrunk by more preferably 2 to 12 %, most preferably 2 to 7 %.

Although the elastic polymer expands in the solvent which can dissolve the sea component of the fiber at an area expansion coefficient of 2 to 100 %, it is preferred that when the solvent is removed, the elastic polymer should return to almost its original form at an area change rate of preferably 5 % or less, more preferably 2 % or less.

The value obtained by subtracting the shrinkage factor of the surface layer from the shrinkage factor of the sheet material is preferably 1 to 25 %. It is more preferably 20 % or less, most preferably 2 to 10 %. When the shrinkage factor of the sheet material is larger than the shrinkage factor of the surface layer, as the sheet material shrinks from the original area of the surface layer, a soft sheet product which has a surface layer with a slight surplus feel and no stretchy feel on the grain side can be obtained. When the shrinkage of the sheet material from the original area of the surface layer is small, the area difference between the surface layer and the sheet material is small, whereby the surface layer has almost no surplus feel and the grain layer has a stretchy feel. When the shrinkage of the sheet material from the original area of the surface layer is too large, the area difference between the surface layer and the sheet material is too large, whereby many wrinkles are produced due to the surplus of the surface layer with the result of a poor appearance.

The obtained leather-like sheet product (II) may be gravure coated with an elastic polymer or embossed to further adjust its topmost surface. In the production process of the present invention, it is also preferred to rub the thus obtained sheet product. To rub the sheet product, for example, it is held by clamps and one of the clamps is driven to deform the sheet by rubbing, or it is let pass between stays having two combined projections to be unbind by rubbing while the projections are forced into the sheet product.

The thus obtained leather-like sheet product (II) of the present invention is soft without a stretchy feel on the grain side while it has a high-quality appearance and has a surplus feel on the grain side and small wrinkles when it is bent.

### 3) structure and formation of surface layer

A surface layer may be formed on the surfaces of the first substrate layers of the leather-like sheet products (I) and (II) of the present invention. The structure and form of the surface layer can be selected according to the purpose and use of the leather-like sheet product. The surface layer is, for example, (i) a solid surface layer, (ii) a porous surface layer, (iii) a composite surface layer consisting of a solid layer and a porous layer or (iv) a surface layer having a suede-like appearance. The structures and formation processes of these surface layers will be described hereinbelow.

### (i) solid surface layer

When the surface layer is a solid surface layer, the leather-like sheet product consists of the solid surface layer, the first substrate layer and the second substrate layer in the mentioned order.

The solid surface layer (i) may be a layer which is generally formed on the surface of artificial leather and can be formed by laminating or coating a solution or dispersion of an elastic polymer on the sheet material. The thickness of the solid surface layer is 1 to 200 µm, preferably 3 to 100 µm, particularly preferably 5 to 50 µm. The most preferred method of forming the solid surface layer on the sheet material is lamination. Stated more specifically, for example, a solution of an elastic polymer is cast over release paper and dried to form a film, the solution of the elastic polymer which will become an adhesive layer thereafter is applied to the release paper again and laminated with the sheet material before the solution becomes dry, and dried and bonded to the sheet material by heating. In this case, the surface layer consists of an adhesive layer containing the sea-island type fiber and a film layer containing no sea-island type fiber. Even when the surface layer is thin, a napped layer of the fiber is not exposed to the surface advantageously.

The elastic polymer used in the solid surface layer may be identical to the elastic polymer preferably used in the first substrate layer and preferably has a 100 % elongation modulus of 390 to 1,500 N/cm². When the 100 % elongation modulus is low, the obtained leather-like sheet product is very soft but may be inferior in abrasion resistance, heat resistance and solvent resistance and when the 100 % elongation modulus is high, the obtained leather-like sheet product may have a hard feel and may be inferior in flexing resistance and hardness at a low temperature.

Examples of the elastic polymer used in the solid surface layer include polyurethane elastomer, polyurea elastomer, polyurethane·polyurea elastomer, polyacrylic acid resin, acrylonitrile·butadiene elastomer and styrene·butadiene elastomer. Out of these, polyurethane-based polymers such as polyurethane elastomer, polyurea elastomer and polyurethane·polyurea elastomer are preferred. The 100 % elongation modulus is preferably 390 to 1,500 N/cm². When the 100 % elongation modulus is lower than 390 N/cm², the obtained leather-like sheet product is soft but may be inferior in abrasion resistance, heat resistance and solvent resistance. When the 100 % elongation modulus is higher than 1, 500 N/cm², the obtained leather-like sheet may have a hard feel and may be inferior in flexing resistance and hardness at a low temperature.

This elastic polymer preferably has a weight reduction of 15 wt% or less after it is immersed in a solvent which dissolves only the sea component of the sea-island type fiber as used in the later step. The weight reduction is more preferably 10 wt% or less, most preferably 7 wt% or less. As the weight reduction becomes smaller, the surface appearance after the treatment may become better. When the weight reduction is too large, a dissolution phenomenon occurs in the solvent which dissolves only the sea component of the sea-island type fiber, thereby making it difficult to maintain the surface appearance of the sheet product.

It is preferred to use an elastic polymer which expands in the solvent which dissolves only the sea component of the sea-island type fiber at an area expansion coefficient of 2 to 160 % and returns to almost its original form at an area change rate of 5 % or less when the solvent is removed as the elastic polymer of the solid surface layer. Since part or most of a portion having a low molecular weight or a portion having solubility in the solvent of the elastic polymer having a large area expansion coefficient in the solvent which dissolves only the sea component of the sea-island fiber is dissolved in the solvent, the shape of the film may not be able to be maintained. When the above phenomenon does not occur and the elastic polymer has a large area expansion coefficient in the solvent which dissolves only the sea component of the fiber, the elastic polymer greatly deforms at the time of its expansion, and the marks of wrinkles remain on the surface at random after the treatment with the result that an unstable sheet product having a poor appearance may be obtained.

To obtain the weight reduction and area expansion coefficient, a 200 µm-thick film of the elastic polymer is formed and immersed in the solvent which can dissolve only the sea component of the sea-island type fiber for 3 minutes to measure its area and dry weight. For example, when polyethylene is used as the sea component, toluene is used as the solvent for measurement. The measurement temperature may be a temperature at the time of the treatment. For example, when hot toluene is used, 80°C is suitable.

In the leather-like sheet product production process of the present invention, the sea component is then removed by using the solvent which can dissolve the sea component of the sea-island type fiber. The solvent must not dissolve the island component of the fine fiber and may dissolve a small amount of the elastic polymer used in the surface layer but preferably does not dissolve it if possible.

It is preferred that the sheet material portion should be shrunk from its original area when the sea component of the sea-island type fiber is removed. The shrinkage of the sheet material portion can be controlled by the density of a nonwoven fabric constituting the base material and the modulus and amount of the elastic polymer impregnated into the nonwoven fabric. When the density of the nonwoven fabric is low, the modulus of the elastic polymer is low and the amount of the impregnated elastic polymer is small, the sheet material portion tends to greatly shrink. On the contrary, when the density of the nonwoven fabric is high, the modulus of the elastic polymer is high and the amount of the impregnated elastic polymer is large, the sheet material portion tends to hardly shrink. The base material portion is preferably shrunk by 2 to 20 % of its original area by optimizing these conditions. It is shrunk by more preferably 2 to 12 %, most preferably 2 to 7 %.

Although the elastic polymer forming the surface layer expands in the solvent which can dissolve the sea component of the fiber at an area expansion coefficient of 2 to 100 %, it is preferred that when the solvent is removed, the elastic polymer should return to almost its original form at an area change rate of preferably 5 % or less, more preferably 2 % or less.

The value obtained by subtracting the shrinkage factor of the surface layer from the shrinkage factor of the sheet material is preferably 1 to 25 %. It is more preferably 20 % or less, most preferably 2 to 10 %. When the shrinkage factor of the sheet material is larger than the shrinkage factor of the surface layer, as the sheet material shrinks from the original area of the surface layer, a soft sheet product which has a surface layer with a slight surplus feel and no stretchy feel on the grain side can be obtained. When the shrinkage of the sheet material from the original area of the surface layer is small, the area difference between the surface layer and the sheet material is small, whereby the surface layer has almost no surplus feel and the grain layer has a stretchy feel. When the shrinkage of the sheet material from the original area of the surface layer is too large, the area difference between the surface layer and the sheet material is too large, whereby many wrinkles are produced due to the surplus of the surface layer with the result of a poor appearance.

The obtained leather-like sheet product may be gravure coated with an elastic polymer or embossed to further adjust its topmost surface. It is also preferred to rub the thus obtained sheet product. To rub the sheet product, for example, it is held by clamps and one of the clamps is driven to deform the sheet by rubbing, or it is let pass between stays having two combined projections to be unbind by rubbing while the projections are forced into the sheet product.

The thus obtained leather-like sheet product of the present invention is soft without a stretchy feel on the grain side while it has a high-quality appearance and has a surplus feel on the grain side and small wrinkles when it is bent.

### (ii) porous layer

This porous layer is a surface layer having a porous structure formed on the surface of the first substrate layer. Therefore, when the surface layer is a porous layer, the leather-like sheet product consists of the porous layer, the first substrate layer and the second substrate layer in the mentioned order.

As for the shapes of a large number of pores existent in the porous layer, in the section of the porous layer when cut in a direction perpendicular to the surface of the sheet product, the ratio of the diameter of the circumscribed circle to the diameter of the inscribed circle must be 2 or less. The ratio is preferably 1.5 or less. In the present invention, the pores are particularly preferably almost globular, which means that the shapes of the pores may be close to a substantially globular shape, and further preferably, there are no irregularities on the walls of the pores. It is particularly preferred that a large number of pores relatively uniform in size should be existent, and the porous structure of the porous layer apparently differs from the triangular porous structure formed by the wet coagulation of the elastic polymer. Although it is an independent porous structure, preferably, some of the pores are partially connected to one another.

The porous layer has the above porous structure and openings are existent on the surface of the porous layer. The average diameter of the openings is preferably 3 to 50 µm, more preferably 5 to 30 µm, most preferably 10 to 20 µm. When the average diameter of the openings on the surface is smaller than 3 µm, the gas permeability of the base material may deteriorate. When the average diameter of the openings is larger than 50 µm, the strength of the surface layer may lower, the abrasion resistance and peel strength of the surface may deteriorate, and pinholes may stand out on the surface of the sheet product. The diameter is represented by the maximum diameter of each opening existent on the surface when the opening is elliptic. Since the sheet product of the present invention is soft, it readily deforms and the shape of the opening on the surface often becomes elliptic when tension is applied to the sheet product. In this case, the maximum diameter of the opening has a great influence upon the quality of the sheet product.

The diameters of 80 % or more of the openings existent on the surface of the leather-like sheet product having a porous layer are preferably 50 µm or less, more preferably 30 µm or less, most preferably 20 µm or less. The leather-like sheet product of the present invention having such openings on the surface preferably has a gas permeability of 0.5 1/cm²·hr or more and a moisture permeability of 2,000 g/m²·24 hr or more. In consideration of durability, the upper limit of gas permeability is preferably 10 1/cm²·hr and the upper limit of moisture permeability is preferably 50,000 g/m²·24 hr.

The above porous layer is made of an elastic polymer. The elastic polymer used in the porous layer may be identical to the elastic polymer used in the first substrate layer. Examples of the elastic polymer include polyurethane elastomer, polyurea elastomer, polyurethane·polyurea elastomer, polyacrylic acid resin, acrylonitrile·butadiene elastomer and styrene·butadiene elastomer. Out of these, polyurethane-based polymers such as polyurethane elastomer, polyurea elastomer and polyurethane·polyurea elastomer are preferred. The elastic polymer preferably has a 100 % elongation modulus of 390 to 1,500 N/cm². When the 100 % elongation modulus is lower than 390 N/cm², the obtained leather-like sheet product is very soft but may be inferior in abrasion resistance, heat resistance and solvent resistance. When the 100 % elongation modulus is higher than 1, 500 N/cm², the obtained leather-like sheet product may have a hard feel and may be inferior in flexing resistance and hardness at a low temperature.

The elastic polymer used in the porous layer preferably has high solvent resistance. A more preferred example of the elastic polymer is an elastic polymer having a weight reduction of preferably 15 wt% or less, more preferably 10 wt% or less, most preferably 7 wt% or less after it is immersed in toluene heated at 80°C for 3 minutes.

The density of the porous layer is preferably 0.20 to 0.90 g/cm³, more preferably 0.29 to 0.75 g/cm³, most preferably 0.37 to 0.67 g/cm³. When the density is too low, the strength of the elastic polymer may lower and the abrasion resistance of the porous layer and the peel strength of the surface layer may deteriorate. When the density is too high, gas permeability and moisture permeability are not obtained. The thickness of the porous layer is preferably 1 to 200 µm, more preferably 3 to 100 µm, most preferably 5 to 50 µm. When the porous layer has a low density and a small thickness, surface physical properties may deteriorate as seen when the density is too low and when the porous layer has a high density and a large thickness, the obtained sheet product impairs its high-grade appearance such as finely wrinkles when it is bent.

All or part of the porous layer is preferably made of a crosslinked polymer. By using the crosslinked polymer, the surface strength and solvent resistance of the porous layer can be improved.

One of the methods of forming a porous layer as the surface layer is to use a solution of an elastic polymer containing fine particles which can dissolve in a solvent when the solution of the elastic polymer is applied to the sheet material and coagulated in the above process for producing a leather-like sheet product. A porous layer is formed on the surface by dissolving and removing the fine particles by using the solvent which dissolves the fine particles after coagulation.

Preferred examples of the fine particles which can dissolve in the solvent include polyolefins such as polyethylene, polypropylene and polystyrene and polyesters. Out of these, polyethylene is preferred and low-density polyethylene is particularly preferred from the viewpoint of solubility. Preferably, the solvent used herein does not dissolve the elastic polymer. The diameters of the fine particles are preferably in the range of 200 µm or less, more preferably 100 µm or less, most preferably 50 µm or less. The average particle diameter of the fine particles is preferably 10 to 50 µm, most preferably 20 to 30 µm.

To form the porous layer, various methods may be employed. Basically, a solution or dispersion of the elastic polymer containing the above dispersed fine particles is laminated with or coated on the sheet material to form the porous layer. The most preferred method is lamination. Stated more specifically, for example, a solution of the elastic polymer containing soluble fine particles dispersed therein is cast over release paper and dried to form a film, the solution of the elastic polymer is applied to the surface of the film again and laminated with the sheet material before the solution becomes dry, and dried and bonded to the sheet material by heating. In this case, even when the layer which will become a porous layer has a porous structure, a napped layer of the fiber is not exposed to the surface advantageously.

The content of the fine particles in the porous layer is preferably 2 to 300 wt% based on the solid content of the elastic polymer. The content of the fine particles is more preferably 10 to 200 wt%, particularly preferably 20 to 150 wt%. When the content is too low, many pores can be formed in the surface layer but the gas permeability and moisture permeability of the surface layer become very low and when the content is too high, the strength of the surface lowers and the appearance may worsen.

The elastic polymer used to form the porous layer has a weight reduction of preferably 15 wt% or less, more preferably 10 wt% or less, most preferably 7 wt% or less after it is immersed in the solvent which dissolves the fine particles. As the weight reduction becomes smaller, the appearance of the surface after the treatment tends to become better. When the weight reduction is too large, a dissolution phenomenon occurs in the solvent which dissolves the fine particles, thereby making it difficult to maintain the appearance of the surface.

In the above process, the fine particles contained in the layer are dissolved and removed by using the solvent which dissolves the fine particles to form a porous structure in the layer. Toluene is preferably used as the solvent when polyethylene is used as the fine particle component. This solvent may dissolve a small amount of the elastic polymer used in the substrate and the surface layer but preferably does not dissolve it if possible. The porous layer having a porous structure is formed by dissolving and removing the fine particles contained in the layer. The porous structure formed in the porous layer apparently differs from the triangular porous structure formed by the wet coagulation of an ordinary elastic polymer and is such that the a large number of pores which are almost globular in shape and relatively uniform in size are existent and some of them are partially connected to one another.

It is also preferred to use a heated solvent in order to enhance the extraction efficiency of the fine particles, and the heating temperature of the solvent is preferably 75 to 100° C. When the temperature is too high, the expansion of the elastic polymer readily occurs and the porous layer may deteriorate. To dissolve and remove the fine particles, after the sheet material is immersed in the solvent, it is preferably nipped to eliminate the fine particles from the layer actively. It is preferred that nipping should be carried out 3 to 10 times and that the clearance at the time of nipping should be 60 to 90 % of the total thickness of the sheet.

The solvent for dissolving the sea component of the sea-island type fiber and the solvent for dissolving the fine particles are preferably the same in the manufacture of the sheet product. When the same solvent can be used, the sea-island type fiber and the fine particles can be treated in the same step, which is effective from the viewpoint of energy saving.

When the sea component of the sea-island type fiber is dissolved and removed, the sheet material portion is preferably shrunk from its original area while removing. Although the elastic polymer for forming the porous layer expands in the solvent which dissolves only the sea component of the fiber unlike the shrinking base material, it preferably returns to its original form when the solvent is removed.

The value obtained by subtracting the shrinkage factor of the porous layer from the shrinkage factor of the sheet material is preferably 1 to 25 %. When the shrinkage factor of the sheet material is larger than the shrinkage factor of the porous layer, as the sheet material shrinks from the original area of the porous layer, a soft sheet product which has a porous layer with a slight surplus feel and no stretchy feel on the grain side can be obtained. When the shrinkage of the sheet material from the original area of the porous layer is small, the area difference between the porous layer and the sheet material is small, whereby the porous layer has almost no surplus feel and the grain layer has a stretchy feel. When the shrinkage of the sheet material from the original area of the porous layer is too large, the area difference between the porous layer and the sheet material is too large, whereby many wrinkles are produced due to the surplus of the porous layer with the result that the obtained sheet product has a poor appearance.

It is also preferred to rub the obtained leather-like sheet product. To rub the sheet product, it is held by clamps and one of the clamps is driven to deform the sheet by rubbing, or it is let pass between stays having two combined projections to be unbind by rubbing while the projections are forced into the sheet product.

The thus obtained leather-like sheet product having a porous layer as a surface layer is excellent in terms of gas permeability, moisture permeability and feeling.

### (iii) composite surface layer

When the surface layer is a composite surface layer, the leather-like sheet product consists of the composite surface layer, the first substrate layer and the second substrate layer in the mentioned order. This composite surface layer (iii) consists of a solid layer and a porous layer. The solid layer of the composite surface layer is existent on the front surface side. The leather-like sheet product having this composite surface layer on the front surface side is a grain sheet product.

The solid layer and the porous layer forming the composite surface layer are made of elastic polymers. The elastic polymers forming these layers may be the same or different. Examples of the elastic polymer include polyurethane elastomer, polyurea elastomer, polyurethane·polyurea elastomer, polyacrylic acid resin, acrylonitrile·butadiene elastomer and styrene·butadiene elastomer. Out of these, polyurethane-based polymers such as polyurethane elastomer, polyurea elastomer and polyurethane·polyurea elastomer are preferred. The elastic polymer has a 100 % elongation modulus of preferably 300 to 1,500 N/cm². When the 100 % elongation modulus is lower than 300 N/cm², the obtained leather-like sheet product is soft but may be inferior in abrasion resistance, heat resistance and solvent resistance. When the 100 % elongation modulus is higher than 1,500 N/cm², the obtained leather-like sheet may have a hard feel and may be inferior in flexing resistance and hardness at a low temperature.

The elastic polymer used in the composite surface layer preferably has high solvent resistance. More specifically, it has a weight reduction of preferably 0 to 25 wt%, more preferably 3 to 10 wt% after it is immersed in toluene heated at 80°C for 3 minutes.

Fine openings having a diameter smaller than 5 µm are preferably existent on the surface of the solid layer as the topmost surface out of the composite surface layer. More preferably, fine openings having a diameter of less than 4 µm and 0.1 µm or more, specifically 0.3 µm or more are existent. When the openings have a diameter of 5 µm or more, as the diameter increases, gas permeability and moisture permeability become higher but water pressure resistance which is an index value of waterproofness becomes lower. When the openings have a small diameter, the moisture permeability of the leather-like sheet product may become unsatisfactory.

When the openings are existent on the surface of the composite surface layer, the number of the openings is preferably 10 to 1,000/mm², more preferably 25 to 750/mm², most preferably 50 to 500/mm². When the number is small, uniform moisture permeability is hardly obtained on the surface and when the number is large, moisture permeability improves but the strength of the surface layer lowers and the abrasion resistance of the sheet product deteriorates.

The solid layer and porous layer of the composite surface layer can be distinguished from each other based on whether a void is observed or not in an electron microphotograph of the section of the composite surface layer when cut in a direction perpendicular to the surface of the leather-like sheet product. Basically, there is no void in the solid layer and only openings extending from the porous layer to the surface may be existent. As the openings in the solid layer are fine, they can be rarely recognized by the observation of the section though they are recognized by the observation of the surface.

Further, a large number of voids having an average diameter of 5 to 200 µm are existent in the section of the porous layer of the composite surface layer. The average diameter of the voids in the section is preferably smaller than 100 µm, particularly preferably 10 to 50 µm. When the average diameter of the voids is small, the gas permeability of the base material may lower. When the average diameter of the voids is large, the strength of the surface layer may lower and the abrasion resistance and peel strength of the surface layer may deteriorate. The diameter is obtained by measuring a void when the section perpendicular to the surface layer is observed and not always the maximum diameter of the void. When the void is elliptic, its maximum diameter is taken as its diameter. Since the sheet product of the present invention is soft, it readily deforms and the openings on the surface often become elliptic when tension is applied thereto. In this case, the maximum diameters of the openings have a great influence upon the quality of the sheet product.

The ratio of the diameter of the circumscribed circle to the diameter of the inscribed circle of each void constituting each pore of the porous layer in the section is preferably 2 or less. The ratio is more preferably 1.5 or less. In the present invention, the voids constituting the pores are preferably almost globular, which means that the shapes of the voids may be close to a substantially globular shape, and further preferably, there are no irregularities on the walls of the voids. It is preferred that a large number of voids relatively uniform in size should be existent, and the porous structure of the porous layer apparently differs from the triangular porous structure formed by the wet coagulation of the elastic polymer. Although it is an independent porous structure, preferably, some of the pores are partially connected to one another.

The leather-like sheet product having a composite surface layer of the present invention has the first substrate layer on the layer (porous layer) side opposite to the surface of the solid layer.

It is further preferred that the fiber should not penetrate in the solid layer and the porous layer of the composite surface layer of the sheet product of the present invention. When the solid layer and the porous layer in which the fiber bundle does not penetrate are existent on the surface side, even if the whole surface layer is thin, it is possible to prevent the napping of fine fibers on the surface.

It is also preferred that all of the composite surface layer or the porous layer in particular should be made of a crosslinked elastic polymer. When it is made of a crosslinked elastic polymer, the surface strength and solvent resistance of the layer can be improved.

The solid layer of the composite surface layer has a thickness of preferably 1 to 50 µm, more preferably 3 to 20 µm, most preferably 5 to 20 µm. When it is too thick, even if fine openings are existent, moisture permeability may lower and when it is too thin, water pressure resistance may lower. The porous layer has a thickness of 1 to 100 µm and a density of preferably 0.20 to 0.90 g/cm³, more preferably 0.3 to 0.7 g/cm³. When the density is too low, the strength of the elastic polymer may lower and the abrasion resistance and peel strength thereof may deteriorate. When the density is too high, moisture permeability may lower. The thickness of the porous layer is preferably 2 to 100 µm, most preferably 3 to 50 µm. When the porous layer has a low density and a small thickness, surface physical properties may deteriorate as seen when the density is too low. When the porous layer has a high density and a large thickness, the obtained sheet product impairs its high-grade appearance such as finely wrinkle, when it is bent.

Preferably, the leather-like sheet product having a composite surface layer of the present invention has a moisture permeability of 2, 000 g/m²·24 hr or more. The upper limit of moisture permeability is generally 8,000 g/m²·24 hr, preferably 2,000 to 5,000 g/m²·24 hr. While the leather-like sheet product has such high moisture permeability, it preferably has a water pressure resistance of 1.9 kPa or more. The upper limit of water pressure resistance is about 500 kPa, and the water pressure resistance is preferably in the range of 5 to 100 kPa. In the present invention, when fine openings are existent on the surface of the leather-like sheet product and fine fibers are existent in the first substrate layer as a fiber bundle, these contrary properties can be maintained at high levels.

The process for producing a leather-like sheet product having a composite surface layer as a surface layer of the present invention comprises the steps of forming a layer of an elastic polymer (A) having an expansion coefficient for a solvent (2) of 10 to 300 %, a layer of an elastic polymer (B) containing fine particles which can dissolve in the solvent (2), and the first substrate layer which penetrates in a sheet material on the sheet material composed of a fine fiber forming sea-island type fiber consisting of two or more components which differ from each other in solubility in a solvent (1) and the elastic polymer, dissolving and removing the sea component of the sea-island type fiber by using the solvent (1) to make fine fibers, and dissolving and removing the fine particles by using the solvent (2). The solvent (1) and the solvent (2) may differ from each other but preferably identical to each other from the viewpoint of production efficiency. The elastic polymer (A) and the elastic polymer (B) may differ from each other but preferably have the same expansion coefficient for the solvent (2) from the viewpoints of feeling and adhesion.

The fine fiber forming sea-island type fiber consisting of two or more components which differ from each other in solubility in the solvent (1) and used in the above process is what has already been described in 1) and 2) above.

The sheet material composed of the sea-island type fiber and the elastic polymer is what has been described in 1) and 2) above.

In the process for producing a leather-like sheet product having a composite surface layer of the present invention, the elastic polymer (A) layer, the elastic polymer (B) layer and the elastic polymer layer forming the first substrate layer are formed on the sheet material.

The elastic polymers used in the process for producing a leather-like sheet product may be identical to the elastic polymers described for the leather-like sheet products 1) and 2).

Describing the elastic polymers of the composite surface layer in particular, they preferably have a 100 % elongation modulus of 300 to 1,500 N/cm². When the 100 % elongation modulus is low, the obtained leather-like sheet product is soft but may be inferior in abrasion resistance, heat resistance and solvent resistance. When the 100 % elongation modulus is high, the obtained leather-like sheet product may have a hard feel and may be inferior in flexing resistance and hardness at a low temperature.

The elastic polymer (A) must have an expansion coefficient for the solvent (2) of 10 to 300 %. This expansion coefficient is preferably 15 to 250 %, most preferably 20 to 200 %. When the expansion coefficient is smaller than 10 %, the solvent (2) hardly penetrates in the elastic polymer (B) layer which will be described hereinafter and accordingly, cannot dissolve the fine particles which dissolve in the solvent (2) of the elastic polymer (B) layer completely, thereby making it difficult to make the elastic polymer (B) layer porous and form fine openings in the elastic polymer (A) layer. When the expansion coefficient is larger than 300 %, the surface layer greatly deforms in the solvent, thereby impairing the appearance of the leather-like sheet product. It is preferred to select and use an elastic polymer which expands in the solvent at an area expansion coefficient of 10 to 300 % and returns to almost its original form with an area change rate of 5 % or less when the solvent is removed as the elastic polymer used herein. The elastic polymer (B) preferably has the same expansion coefficient as the elastic polymer (A) to dissolve the fine particles. The elastic polymer constituting the first substrate layer preferably has a lower expansion coefficient than the elastic polymers (A) and (B) to improve its adhesive force. Also the elastic polymer constituting the sheet material layer preferably has a lower expansion coefficient than the elastic polymers (A) and (B).

The elastic polymers used in the composite surface layer preferably have high solvent resistance. More specifically, the elastic polymers have a weight reduction of preferably 0 to 25 wt%, more preferably 3 to 10 wt% after they are immersed in toluene heated at 80° C for 3 minutes. As the weight reduction becomes smaller, the surface appearance after the treatment may become better. When the weight reduction is too large, a dissolution phenomenon occurs in the solvent, thereby making it difficult to maintain the surface appearance.

To obtain the area expansion coefficient and the weight reduction, a 200 µm-thick film of the elastic polymer is formed and immersed in the solvent for 3 minutes to prepare a measurement film sample. For example, when polyethylene is used as a component to be dissolved, toluene is used as the solvent. The measurement temperature may be a temperature at the time of the treatment. For example, 80° C heated toluene is used.

The elastic polymer (B) layer must contain fine particles which dissolve in the solvent (2). The fine particles may be made of the same compound as described in 2) above. The fine particles are contained in an amount of preferably 3 to 300 wt% based on the solid content of the elastic polymer. The content of the fine particles is more preferably 10 to 200 wt%, particularly preferably 20 to 150 wt%. When the content of the fine particles is low, the number of fine openings on the surface and the number of pores in the inside become small, thereby reducing moisture permeability. When the content is high, the number of fine openings and the number of pores become large, thereby reducing the strength and peel strength. The diameters of the fine particles are preferably 200 µm or less, more preferably 100 µm or less, most preferably 50 µm or less.

In the present invention, the surface layer consisting of the elastic polymer (A) layer, the elastic polymer (B) layer and the elastic polymer layer forming the first substrate layer must be formed on the sheet material composed of the elastic polymer and the sea-island type fiber. Before fine fibers are made from the sea-island type fiber by using the solvent, independent bubbles such as air bubbles may be partially existent around the fiber of the elastic polymer layer forming the first substrate layer but it is basically preferred that there should be no space between the sea-island type fiber and the elastic polymer of the layer. When there is a space therebetween, the elastic polymer cannot surround the bundle of fine fibers at equal intervals in the end.

Various methods may be used to form the composite surface layer. A solution or dispersion containing the elastic polymer may be laminated with or coated on the sheet material to obtain the composite surface layer. The most preferred method is lamination. More specifically, for example, a solution containing the elastic polymer (A) is cast over release paper and dried to form a film as a first layer, a solution containing the elastic polymer (B) is cast over the release paper and dried to form a film as a second layer, and a solution of the elastic polymer forming the first substrate layer is applied to the second layer and laminated with the sheet material before the solution becomes dry, and dried and bonded to the sheet material by heating. At this point, the elastic polymer which becomes the first substrate layer preferably contains a crosslinking agent. In this case, the layers to be laminated consist of the first layer (solid surface layer), the second layer (porous layer) and the layer forming the first substrate layer. Even when the solid surface layer is thin, a napped layer of the fiber is not exposed to the surface advantageously.

Fine fibers are made from the sea-island type fiber by using the solvent (1) and the fine particles are dissolved and removed by using the solvent (2). The order of these steps may be arbitrary and the steps may be carried out at the same time. When these steps are carried out at the same time, the solvent (1) and the solvent (2) are preferably identical to each other as described above. The easily soluble component (sea component) of the fiber and the fine particles are preferably identical to each other from the viewpoint of recovery. When they are identical, after they are dissolved, the sea component can be easily recovered from the resulting solution, which is ecologically advantageous and preferred.

It is also preferred to use a heated solvent in order to enhance extraction efficiency at the time of dissolution and removal, and the heating temperature of the solvent is preferably 75 to 100° C. When the temperature is too high, the expansion of the elastic polymer readily occurs and the composite surface layer may deteriorate. To dissolve and remove the fine particles, after the sheet is immersed in the solvent, it is preferably nipped to eliminate the fine particles from the composite surface layer actively. It is preferred that nipping should be carried out 3 to 10 times and that the clearance at the time of nipping should be 60 to 90 % of the total thickness of the sheet product.

It is preferred that the sheet material portion should be shrunk from its original area at the time of the treatment with the solvent. The shrinkage of the sheet material portion can be controlled by the density of a nonwoven fabric constituting the sheet material and the modulus and amount of the elastic polymer impregnated into the nonwoven fabric. When the density of the nonwoven fabric is low, the modulus of the elastic polymer is low and the amount of the impregnated elastic polymer is small, the sheet material portion tends to greatly shrink. On the contrary, when the density of the nonwoven fabric is high, the modulus of the impregnated elastic polymer is high and the amount of the elastic polymer is large, the sheet material portion tends to hardly shrink. The sheet material portion is preferably shrunk by 2 to 20 % of its original area by optimizing these conditions. It is shrunk by more preferably 2 to 12 %, most preferably 2 to 7 %.

Although the elastic polymers forming the composite surface layer expand in the solvent, it is preferred that when the solvent is removed, the elastic polymers should return to almost their original forms at an area change rate of preferably 5 % or less, more preferably 2 % or less.

The value obtained by subtracting the shrinkage factor of the composite surface layer from the shrinkage factor of the sheet material is preferably 1 to 25 %. It is more preferably 20 % or less, most preferably 2 to 10 %. When the shrinkage factor of the sheet material is larger than the shrinkage factor of the composite surface layer, as the sheet material shrinks from the original area of the surface layer, a soft sheet product which has a composite surface layer with a slight surplus feel and no stretchy feel on the grain side can be obtained. When the shrinkage of the sheet material from the original area of the composite surface layer is small, the area difference between the composite surface layer and the sheet material is small, whereby the surface layer has almost no surplus feel and the grain layer has a stretchy feel. When the shrinkage of the sheet material from the original area of the composite surface layer is too large, the area difference between the composite surface layer and the sheet material is too large, whereby many wrinkles are formed due to the surplus of the surface layer with the result of a poor appearance.

It is also preferred to rub the thus obtained leather-like sheet product. To rub the sheet product, it is held by clamps and one of the clamps is driven to deform the sheet by rubbing, or it is let pass between stays having two combined projections to unbind by rubbing while the projections are forced into the sheet product.

The thus obtained leather-like sheet product having a composite surface layer is soft without a stretchy feel on the grain side while it has a high-quality appearance and has a surplus feel on the grain side and small wrinkles when it is bent. Since pores derived from the particles contained in the elastic polymer (B) layer are existent on the surface of the obtained leather-like sheet product, a grain leather-like sheet product having excellent moisture permeability and water resistance can be obtained.

### (iv) surface layer having a suede-like appearance

When the surface layer is a surface layer having a suede-like appearance, the leather-like sheet product consists of the suede-like surface layer, the first substrate layer and the second substrate layer in the mentioned order.

The expression "suede-like appearance" means that the sheet product has a napped layer of fine fibers and the length of the nap is preferably uniform. The fineness of the fine fibers is 0.2 dtex or less, particularly preferably 0.0001 to 0.05 dtex like the fiber sheet in order to obtain a suede-like appearance. Preferably, the surface is smooth and soft and has sharp chalkiness.

To manufacture a sheet product having a suede-like surface layer, a conventionally known process for producing suede-like or nubuck-like artificial leather may be employed. For example, it can be obtained by impregnating a fiber sheet with an elastic polymer, coagulating the elastic polymer to prepare a sheet material, making fine fibers from a sea-island type fiber contained in the sheet material to form a sheet product and polishing the surface of the sheet product. The length of a nap and the appearance of the sheet product can be controlled by limiting the apparent density of the fiber sheet, increasing the amount of the elastic polymer or controlling the polishing conditions.

It is also preferred that a treating solution which contains a solvent for the elastic polymer and does not dissolve a bundle of fine fibers be applied to the surface of the sheet product composed of the bundle of fine fibers and the elastic polymer, part of the elastic polymer be dissolved or expanded, dried and re-solidified, and the fine fibers be napped or cut. This method can prevent a nap on the surface from coming off from the surface.

The treating solution containing the solvent for the elastic polymer is preferably a mixture of a good solvent for the elastic polymer such as dimethylformamide, diethylformamide, dimethyl acetamide or tetrahydrofuran and optionally water, alcohol, methyl ethyl ketone and part of the above elastic polymer.

### Effect of the Invention

According to the present invention, there are provided (1) an artificial leather-like sheet product which is soft and has low resiliency and physical properties similar to natural leather while it has a strong sensation of preventing stretching which could not be attained by the leather-like sheet product of the prior art, (2) a soft grain leather-like sheet product which has a surplus feel similar to natural leather on the grain side, small wrinkles when it is bent and no stretchy feel on the grain side while it has a high-quality appearance, (3) a grain leather-like sheet product having gas permeability, moisture permeability and a high-quality appearance, and processes for producing these leather-like sheet products.

The leather-like sheet products of the present invention are suitable for use as a material for shoes, clothes, furniture and gloves.

### Examples

The following examples are provided for the purpose of further illustrating the present invention but are in no way to be taken as limiting. "Percentage (%)" and "ratio" mean weight percentage (wt%) and weight ratio, respectively, unless otherwise stated in the examples and comparative examples. Measurement values in the examples and comparative examples were obtained by the following methods.

### (1) thickness

This is measured with a spring type dial gauge (load of 1.18 N/cm²).

### (2) weight

A 10 cm x 10 cm specimen is measured with a precision balance.

### (3) thickness of first substrate layer

This is measured from an electron microphotograph of the section of the base material and an average value is taken.

### (4) thickness of layer other than base material layer in surface layer (thickness of film layer)

A solution of an elastic polymer is applied to release paper to a predetermined weight and dried to measure the thickness of the coating film.

### (5) wet amount of elastic polymer in first substrate layer

The weight of the solution of the elastic polymer applied is taken as the wet amount of the elastic polymer in the first substrate layer.

### (6) amount of fiber in first substrate layer

The ratio of the first substrate layer obtained by dividing the thickness "b" of the first substrate layer (depth of the elastic polymer impregnated layer) by the total thickness "a" of the base material before extraction is multiplied by the weight "c" (weight before extraction x ratio of unextracted fiber) of the fiber after extraction to obtain the weight of the fiber in the first substrate layer (impregnated layer).$\text{(amount of fiber in first substrate layer) = (b/a) x c}$

### (7) amount of fiber in second substrate layer

The value obtained by subtracting the thickness "b" (depth of the elastic polymer impregnated layer) of the first substrate layer from the total thickness "a" of the base material before extraction is divided by the total thickness "a" of the base material to obtain the ratio of the second substrate layer (non-impregnated layer) and this value is multiplied by the weight "c" (weight before extraction x ratio of unextracted fiber) of the fiber after extraction.$\text{(weight of non-impregnated layer) = ((a - b)/a) x c}$

### (8) 5 % elongation stress (σ5)/20 % elongation stress (σ20)/tensile strength/elongation

An elongation test is made on a specimen sampled from a leather-like sheet product with a constant-speed elongation tester to measure loads at the time of 5 % elongation, 20 % elongation and at break. Elongation at break is also measured. The specimen is based on JIS-K-6550 5-2-1.

### (9) peel strength

A PVC sheet lined with a plain weave fabric of the same size as the sheet is bonded to the grain layer side of a 2.5 cm (width) x 15 cm (length) specimen by an urethane-based adhesive. Five sections of the specimen are marked at intervals of 2 cm to carry out a peel test with a constant speed tensile tester at a rate of 50 mm/min. Peel strength at this point is recorded on a recorder and the minimum values of five sections at intervals of 2 cm are read to calculate the average value of the five measurement data per cm in width.

### (10) tear

A cut is made in a specimen sampled from a leather-like sheet product and an elongation test is made on this specimen with a constant speed tensile tester to measure changes in load at the time of tear. The average value of the changes is taken as tear.

### (11) 100 % elongation modulus of elastic polymer

An elongation test is made on a specimen sampled from a resin film (thickness of about 0.1 mm) with a constant speed tensile tester at a rate of 100 %/min to read a load at a 100 % elongation and convert it into the unit of N/cm². The specimen is based on the JIS-K-6301-2 dumbbell method.

### (12) solvent expansion coefficient of elastic polymer

A 15 cm x 15 cm specimen sampled from a resin film (thickness of about 200 µm) is marked with a 10 cm x 10 cm square and immersed in toluene heated at 80° C for 3 minutes to measure the area of the square so as to obtain an increase in the area.

### (13) appearance/buckling feel/soft feel

"Appearance", "buckling feel" and "soft feel" in the tables are evaluated according to the ten-grade system. "5" means that they are normal and as the numerals become larger, they become better.

### (14) tight feel

"Tight feel" in the tables is evaluated according to the ten-grade system. "5" means that it is normal and as the numeral becomes smaller, it is less tight.

### (15) bending resistance (cantilever method)

A 2 cm x about 15 cm sample is measured by the 45°Cantilever method specified in JIS L-10966.19.1. The unit is cm.

### (16) bending recovery percentage

A 1 cm (width) x 9 cm (length) specimen is placed on a measurement table in such a manner that its front side faces down and projected 1 cm from the end of the measurement table. This projecting portion is bent upward, placed under a load of 9.8 N and left as it is. One hour after the specimen is placed under load, the load is removed and 30 second after the removal, how much the fold is recovered from the horizontal table is measured with a protractor. When it returns to its original position (180°), its bending recovery percentage is 100 % and when it remains unchanged, its bending recovery percentage is 0 %.

### (17) abrasion

Abrasion is measured with a Taber abrasion tester by the following method.
Abrasion (weight reduction); A weight change (mg) when a specimen is turned 100 times while in contact with the #280 abrasion wheel under a load of 9.8 N is measured.
Abrasion (number of times); The number of rotations of the specimen is measured by placing the specimen under a load of 9.8 N while in contact with the CS10 abrasion wheel before an appearance of third grade is obtained.
Abrasion (grade); Abrasion after the specimen is turned 10,000 times while in contact with the CS10 abrasion wheel under a load of 9.8 N is evaluated according to the five-grade system. When the specimen is least worn down, abrasion is evaluated as grade 5.

### (18) number and diameters of pores on the surface

As for the diameters of pores existent on the surface and in the section, the diameters and number of pores per unit area (1 mm²) are measured from 1,000X electron microphotographs of the surface and section of the base material to obtain the average diameter of the pores. When the pores are not spherical, the maximum diameters of the pores are measured. As for the shapes of the pores, the diameter of the circumscribed circle and the diameter of the inscribed circle of each pore are measured from an electron microphotograph of the section to calculate their ratio (circumscribed circle/inscribed circle).

### (19) gas permeability

The time required for 50 cm³ of air to pass through is measured with a Gurley densometer in accordance with the JIS P-8117 method and converted into the unit of 1/cm²·hr.

### (20) water pressure resistance

This is measured in accordance with the JIS L-1092 high water pressure method.

### (21) moisture permeability

This is measured in accordance with the JIS L-1099 A-1 calcium chloride method. The measurement is carried out three times an hour to obtain the average value of the measurement data. The obtained value is multiplied by 24 to obtain a value (g/m²·24 hr) per day (24 hours).

### (22) antifouling property

A template having a 36 mm-diameter round hole is placed on a 5 cm x 5 cm specimen and fixed in such a manner that the round portion is located at the center of the specimen. 3 mg of cigarette ashes is placed at the center of the specimen with a medical spoon and rubbed into the specimen by drawing a circle 25 times clockwise and 25 times counterclockwise with a finger. The specimen is turned upside down to drop an excess of the ashes, the template having a round hole is removed, dirt is removed three times with a clean finger by changing the finger each time and further wiped off 10 times with absorbent cotton containing a small amount of water to compare the specimen with an appearance standard for the removal of dirt (grade 5 is excellent and grade 1 is unacceptable).

The cigarette ashes used in this test are obtained by smashing the ashes of Mild Seven (of Nippon Tobacco Industry Co., Ltd.) in a mortar.

### Example 1

Nylon-6 as an island component and low-density polyethylene as a sea component were mixed spun in a ratio of 50/50 to obtain a sea-island type composite fiber of 9.0 dtex. The obtained composite fiber was cut to a length of 51 mm to obtain raw stock. This raw stock was carded and cross layered to obtain a web which was then needle punched at a rate of 1,000 fibers/cm², heated in the chamber of a hot air drier set at 150° C and pressed with a calender roll set at 30° C before the base material became cold to prepare a nonwoven fabric (sheet) composed of a fine fiber forming sea-island type composite fiber having a weight of 450 g/m², a thickness of 1.5 mm and an apparent density of 0.30 g/cm³.

Thereafter, an impregnating solution (1) (concentration of 15 %) prepared by diluting an elastic polymer (1) having a 100 % elongation modulus of 1,080 N/cm² (polyurethane resin, Crisvon TF50P, manufactured by Dainippon Ink and Chemicals, Inc., concentration of 30 wt%) with a mixed solution of dimethylformamide (to be abbreviated as DMF hereinafter) and methyl ethyl ketone (mixing ratio of 4:6) was applied to the surface of the above obtained nonwoven fabric to a solution wet weight of 150 g/m² to be fully impregnated into the sheet and dried in the chamber of a hot air drier set at 120°C. Further, the same impregnating solution (1) was applied to the above coated surface again to a wet weight of 150 g/m² to be fully impregnated into the sheet so as to form an impregnated layer, dried in the chamber of a hot air drier at 140°C, and coagulated to produce a base material impregnated with the elastic polymer (1) on the front surface side alone.

It was confirmed from an electron microphotograph that the impregnated elastic polymer (1) was distributed from the surface to an average depth of 120 µm in a solid state. This was equivalent to 8 % of the thickness of the base material. The weight reduction of the elastic polymer (1) in an organic solvent was 1.6 % in the case of toluene (80°C, 3 minutes).

Thereafter, the impregnated base material was dipped in toluene heated at 80° C and nipped repeatedly to dissolve and remove the polyethylene component as the sea component so as to produce composite fine fibers. Then toluene contained in the base material was removed by azeotropy in hot water heated at 90°C, and the base material was dried in the chamber of a hot air drier set at 120°C to obtain a leather-like sheet product composed of the fine fibers.

DMF which is a good solvent for the impregnated polyurethane resin was applied to the resin impregnated surface of the obtained leather-like sheet product with a 200-mesh gravure roll to a weight of 20 g/m² and dried, and the surface of the sheet product was polished with abrasive paper having a grain size of #320 to nap the fiber on the surface so as to obtain a leather-like sheet product having a suede-like appearance and a nap on the surface.

The leather-like sheet product having a suede-like appearance was dyed with a metal-containing dye and finished by rubbing. When the section of the obtained sheet product was observed through an electron microscope, the structure of the impregnated layer (first substrate layer) composed of the elastic polymer (1) and the bundle of fine fibers and the structure of the non-impregnated layer (second substrate layer) changed continuously. It could be confirmed that the impregnated layer (first substrate layer) was distributed to an average depth of 105 µm from the front surface. The ratio of the fiber to the elastic polymer of the impregnated layer was 29:71 and the weight of the fiber in the non-impregnated portion (second substrate layer) devoid of the polyurethane resin was 207 g/m². A bundle of about 1,000 fine fibers having an average fineness of 0.005 dtex was existent in the impregnated layer, the elastic polymer was not existent in the inside space of the fiber bundle, and the fine fibers accounted for 50 % of the total space volume of all the voids in the elastic polymer surrounding the bundle of fine fibers.

The obtained sheet product hardly extended in any direction and had the characteristic feature of a soft material with a bending resistance measured with a cantilever of 6.2 cm in the longitudinal direction and 6.3 cm in the transverse direction. It had almost no resiliency with a bending recovery percentage of 5 % though it had a σ20/σ5 value of 3.7 in the longitudinal direction and 4.8 in the transverse direction which are excellent as artificial leather. The obtained leather-like sheet product was a very soft material which had low resiliency and was similar to high-grade soft natural leather when it was taken hold of. Its physical properties are shown in Table 1.

### Example 2

A nonwoven fabric (sheet) having a weight of 570 g/m², a thickness of 2.3 mm and an apparent density of 0.25 g/cm³ was obtained from the same sea-island type composite fiber made from nylon-6 and low-density polyethylene as in Example 1 in the same manner as in Example 1 except that the weight was increased and needle punching was carried out at a rate of 1,400 fibers/cm².

Thereafter, the same impregnating solution (1) (concentration of 15 %) of the elastic polymer (1) as in Example 1 was applied to the surface of the above nonwoven fabric in the same manner as in Example 1 except that the wet weight of the solution was changed to 340 g/m² to be fully impregnated into the sheet and dried in the chamber of a hot air drier set at 120° C to obtain an impregnated base material impregnated with the elastic polymer on the front surface side alone. It was confirmed from an electron microphotograph that the impregnated elastic polymer (1) was distributed to an average depth of 150 µm from the front surface in a solid state. The depth was equivalent to 6.5 % of the thickness of the base material.

Thereafter, the polyethylene component was dissolved and removed from the impregnated base material as in Example 1 to obtain a leather-like sheet product comprising fine fibers.

The surface of the obtained leather-like sheet product was treated in the same manner as in Example 1 to obtain a napped and dyed leather-like sheet product having a suede-like appearance. When the section of the obtained sheet product was observed from its electron microphotograph, the structure of the impregnated layer (first substrate layer) composed of the elastic polymer (1) and the bundle of fine fibers and the structure of the non-impregnated layer (second substrate layer) changed continuously. It could be confirmed that the impregnated layer (first substrate layer) was distributed to an average depth of about 128 µm from the front surface. The fine fibers were existent in the impregnated layer as a fiber bundle, the elastic polymer was not existent in the inside space of the fiber bundle, and the fine fibers accounted for 50 % of the total space volume of all the voids in the elastic polymer surrounding the bundle of fine fibers.

The obtained sheet product was a very soft material which hardly extended in longitudinal, transverse and oblique directions as compared with its thickness, had low resiliency and was similar to high-grade soft natural leather when it was taken hold of. Its physical properties are shown in Table 1.

### Example 3

A nonwoven fabric (sheet) having a weight of 870 g/m², a thickness of 2.8 mm and an apparent density of 0.31 g/cm³ was obtained from the same sea-island type composite fiber consisting of nylon-6 and low-density polyethylene as in Example 1 in the same manner as in Example 1 except that the weight was increased and needle punching was carried out at a rate of 1,400 fibers/cm².

Thereafter, the same impregnating solution (1) (concentration of 15 %) of the elastic polymer (1) as in Example 1 was applied to the surface of the above nonwoven fabric to a solution wet weight of 320 g/m² to be fully impregnated into the sheet and dried in the chamber of a hot air drier set at 120° C, and the same impregnating solution was applied to the opposite side to a weight of 320 g/m² to be fully impregnated into the sheet and dried in the chamber of the hot air drier set at 120°C so as to obtain a base material impregnated with the elastic polymer (1) on both sides except for the center portion of the sheet. It was confirmed from an electron microphotograph that the impregnated elastic polymer (1) was distributed to an average depth of 150 µm from the both surface sides of the base material in a solid state. The impregnation depth was equivalent to 4.5 % of the thickness of the base material on each side.

Thereafter, the polyethylene component was dissolved and removed from the impregnated base material in the same manner as in Example 1 to obtain a sheet product comprising fine fibers.

DMF was applied to the both surfaces impregnated with the elastic polymer of the sheet product to a weight of 20 g/m² with a 200-mesh gravure roll and dried, the both surfaces of the sheet product were polished with abrasive paper having a grain size of #320 to nap the fiber on the surface, and the sheet product was sliced into two at a position where the thickness was 1/2 and the elastic polymer non-impregnated portion existed to obtain leather-like sheet products having a suede-like appearance.

Each of the obtained leather-like sheet products was treated in the same manner as in Example 1 to obtain a napped and dyed leather-like sheet product having a suede-like appearance. When the section of the obtained sheet product was observed from its electron microphotograph, the structure of the impregnated layer (first substrate layer) composed of the elastic polymer (1) and the bundle of fine fibers and the structure of the non-impregnated layer (second substrate layer) changed continuously. It could be confirmed that the impregnated layer (first substrate layer) was distributed to an average depth of about 125 µm from the front surface. The fine fibers were existent in the impregnated layer as a fiber bundle, the elastic polymer was not existent in the inside space of the fiber bundle, and the fine fibers accounted for 50 % of the total space volume of all the voids in the elastic polymer surrounding the bundle of fine fibers.

The obtained sheet product hardly extended in longitudinal, transverse and oblique directions as compared with its thickness, had low stress and easily deformed but a characteristic feature specific to soft natural leather whose elongation stops when it elongates a little was seen. The physical properties of the sheet product are shown in Table 1.

### Example 4

A leather-like sheet product comprising fine fibers was obtained by the same processing as in Example 2.

An elastic polymer layer was formed on the surface as a grain layer instead of napping the surface of the obtained leather-like sheet product to obtain a suede-like appearance.

That is, a solution (1) for forming a film layer (concentration 15 wt%) prepared by diluting a polyurethane resin (Cu9430NL, manufactured by Dainichiseika Color & Chemicals Mfg. Co., Ltd., concentration of 30 wt%) having a 100 % elongation modulus of 325 N/cm² as the elastic polymer (2) with a mixed solution of DMF and methyl ethyl ketone (mixing ratio of 4:6) was applied to release paper (AR-74M, thickness of 0.25 mm, manufactured by Asahi Roll Co. , Ltd.) to a wet weight of 130 g/m² and dried at 100° C for 3 minutes. Then, a binder solution (1) comprising 20 parts of an elastic polymer (3) having a 100 % elongation modulus of 245 N/cm² (Crisbon TA265, crosslinked polyurethane resin, manufactured by Dainippon Ink and Chemicals, Inc., concentration of 65 wt%), 80 parts of an elastic polymer (4) having a 100 % elongation modulus of 245 N/cm² (Crisbon TA290, crosslinked polyurethane resin, manufactured by Nippon Ink and Chemicals, Inc., concentration of 45 wt%), 15 parts of an isocyanate-based crosslinking agent (Colonate L, manufactured by Nippon Polyurethane Co., Ltd.), 3 parts of a crosslinking accelerator (Crisbon Accel T, manufactured by Dainippon Ink and Chemicals, Inc.) and 10 parts of DMF was applied to the obtained film to a wet weight of 100 g/m² and laminated with the elastic polymer (1) impregnated side of the leather-like sheet product, the resulting laminate was dried at 100° C for 30 seconds, aged at 70° C for 48 hours and left to be cooled for 12 hours, and the release paper was separated to obtain a grain leather-like sheet product having the elastic polymer layer on the surface.

Further, a polyurethane resin having a 100 % elongation modulus of 350 N/cm² was applied to the surface layer of the sheet product with a 200-mesh gravure roll, and a softening agent was applied to the resin to rub the sheet product.

When the section of the obtained leather-like sheet product was observed from its electron microphotograph, it could be confirmed that the impregnated layer (first substrate layer) containing the elastic polymer was distributed to an average depth of 128 µm from the under side of the adhesive layer on the front surface side. The ratio of the fiber to the elastic polymer of the impregnated layer was 27:73 and the weight of the fiber in the non-impregnated portion (second substrate layer) devoid of the elastic polymer was 266 g/m². The fine fibers were existent in the impregnated layer as a fiber bundle, the elastic polymer was not existent in the inside space of the fiber bundle, and the fine fibers accounted for 50 % of the total space volume of all the voids in the elastic polymer surrounding the bundle of fine fibers.

This leather-like sheet product was a very soft material which had an excellent buckling feel and low resiliency and was similar to high-grade soft natural leather when it was taken hold of. The physical properties of the sheet product are shown in Table 1.

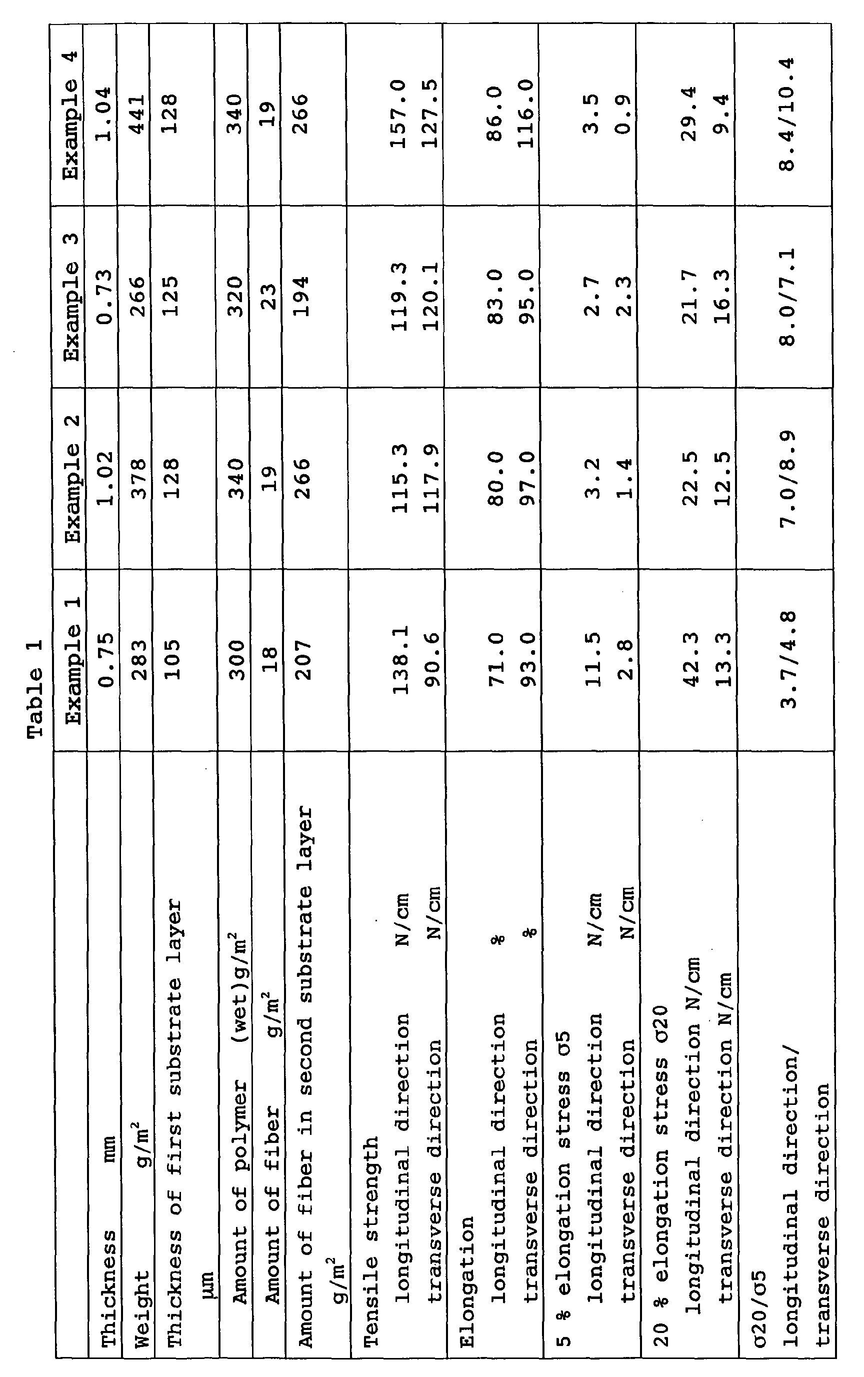

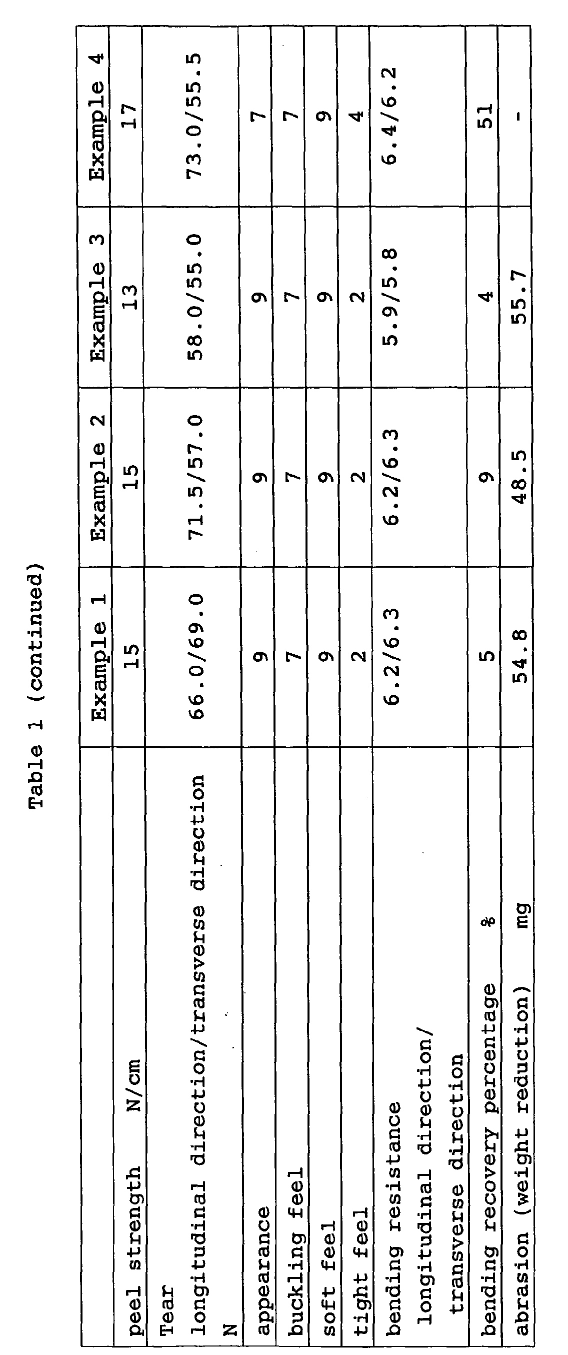

### Comparative Example 1

A nonwoven fabric having a weight of 500 g/m², a thickness of 1.5 mm and an apparent density of 0.33 g/cm³ was obtained from the same sea-island type composite fiber consisting of nylon-6 and low-density polyethylene as in Example 1 in the same manner as in Example 1 except that the weight was increased and needle punching was carried out at a rate of 1,400 fibers/cm².

Thereafter, the nonwoven fabric was impregnated with an impregnating solution (2) of the elastic polymer (1) used in Example 1 dissolved in DMF alone (concentration of 15 %) unlike Example 1 to a solution wet weight of 870 g/m² and immersed in a 10 % DMF aqueous solution to wet coagulate the elastic polymer. Thereafter, the nonwoven fabric was fully washed in 40°C hot water to obtain an elastic polymer impregnated base material. It was confirmed from an electron microphotograph that the impregnated elastic polymer (1) was distributed uniformly into all the layers in a porous form.

Thereafter, the polyethylene component was dissolved and removed from the impregnated base material as in Example 1 to obtain a leather-like sheet product comprising fine fibers.

The surface of the obtained leather-like sheet product was treated in the same manner as in Example 1 to obtain a napped and dyed leather-like sheet product having a suede-like appearance. When the section of the obtained sheet product was observed from its electron microphotograph, it could be confirmed that the elastic polymer was existent in all the layers of the sheet and its structure remained unchanged. The ratio of the fiber to the elastic polymer of the sheet product was 66:34 and further there was no non-impregnated portion devoid of the elastic polymer.

The obtained sheet product was a material which was soft in a bending direction, easily deformed with low stress and had high resiliency with a bending recovery percentage of 79 % and the same feeling as the conventional soft artificial leather. Its physical properties are shown in Table 2.

### Comparative Example 2

An impregnating solution (3) (concentration of 13 %) prepared by dissolving the elastic polymer (1) and an elastic polymer (2) having a 100 % elongation modulus of 600 N/cm² in a ratio of 30:70 in DMF was used in place of the impregnating solution (2) of the elastic polymer (1) having a 100 % elongation modulus of 1,080 N/cm² used in Comparative Example 1 is used to manufacture a leather-like sheet product comprising fine fibers in the same manner as in Comparative Example 1 except that the wet weight of the impregnation solution was changed to 776 g/m².

The surface of the obtained leather-like sheet product was treated in the same manner as in Example 3 to obtain a leather-like sheet product having a suede-like appearance and a nap on both sides. The sheet product was sliced at a position where the thickness was 1/2 to obtain leather-like sheet products having a suede-like appearance.

Each of the obtained leather-like sheet products was further treated in the same manner as in Example 3 to obtain a dyed leather-like sheet product having a suede-like appearance. When the section of the obtained sheet product was observed from its electron microphotograph, it could be confirmed that the porous elastic polymer was existent uniformly in all the layers of the base material. The ratio of the fiber to the elastic polymer was 71:29 and there was no non-impregnated portion devoid of the elastic polymer. This sheet product was a material which was very soft in a bending direction and had high resiliency with a bending recovery percentage of 85 % and low tear strength though they had a low sensation of preventing stretching. Its physical properties are shown in Table 2.

### Comparative Example 3

A nonwoven fabric having a weight of 370 g/m², a thickness of 1.4 mm and an apparent density of 0.26 g/cm³ was obtained from the same sea-island type composite fiber consisting of nylon-6 and low-density polyethylene as in Example 1 in the same manner as in Example 1 except that the weight was reduced.

Thereafter, this nonwoven fabric was immersed in and impregnated with an impregnating solution (4) (concentration of 15 wt%) prepared by dissolving the elastic polymer (1) having a 100 % elongation modulus of 1,080 N/cm² and an elastic polymer (5) having a 100 % elongation modulus of 2,750 N/cm² (polyurethane resin, Crisbon TF300TD, manufactured by Dainippon Ink and Chemicals, Inc., concentration of 30 wt%) in DMF in a ratio of 6:4, an excess of the impregnating solution was squeezed out from the nonwoven fabric to ensure that the wet weight of the impregnating solution became 920 g/m². Subsequently, a wet coating solution (1) (concentration of 20 wt%) prepared by dissolving the elastic polymer (1) having a 100 % elongation modulus of 1,080 N/cm² and an elastic polymer (6) having a 100 % elongation modulus of 340 N/cm² (polyurethane resin, Crisbon TF700S, manufactured by Dainippon Ink and Chemicals, Inc., concentration of 30 wt%) in DMF in a ratio of 9:1 was applied to the surface of the nonwoven fabric to a wet weight of 150 g/m². The sheet composed of the fiber and the elastic polymers were immersed in a 12 % DMF aqueous solution to wet coagulate the elastic polymers, fully washed in 40°C hot water and dried in the chamber of a hot air drier set at 135° C to obtain a material having a surface layer made of the elastic polymers on the base material composed of the sea-island type fiber and the elastic polymers. It was confirmed from an electron microphotograph that all the elastic polymers became porous with many continuous pores by wet coagulation and that the impregnated elastic polymers were uniformly distributed in all the layers in a porous form.

Thereafter, the polyethylene component was dissolved and removed from the obtained base material in the same manner as in Example 1 to obtain a sheet product composed of the fine fibers and the porous elastic polymers. After the surface layer side of the obtained sheet product was embossed to provide a crepe pattern, a polyurethane resin having a 100 % elongation modulus of 350 N/cm² was applied to the embossed surface with a 200-mesh gravure roll, and a softening agent was applied to rub the sheet product.

When the section of the obtained grain sheet product was observed from its electron microphotograph, it could be confirmed that the elastic polymers were uniformly existent in all the layers in the section. The ratio of the fiber to the elastic polymers was 52:48 and there was no non-impregnated portion devoid of the elastic polymers. This sheet product was a material which was a little hard with a solid feel in a bending direction and tight, lacks softness and had high resiliency with a bending recovery percentage of 83 %. The buckling feel of the grain surface layer was not so good. Although the coating layer having an average thickness of 230 µm was existent on the surface, a nap derived from the fine fibers of the impregnated layer was formed on the surface, and the quality of the surface was low. Its physical properties are shown in Table 2.

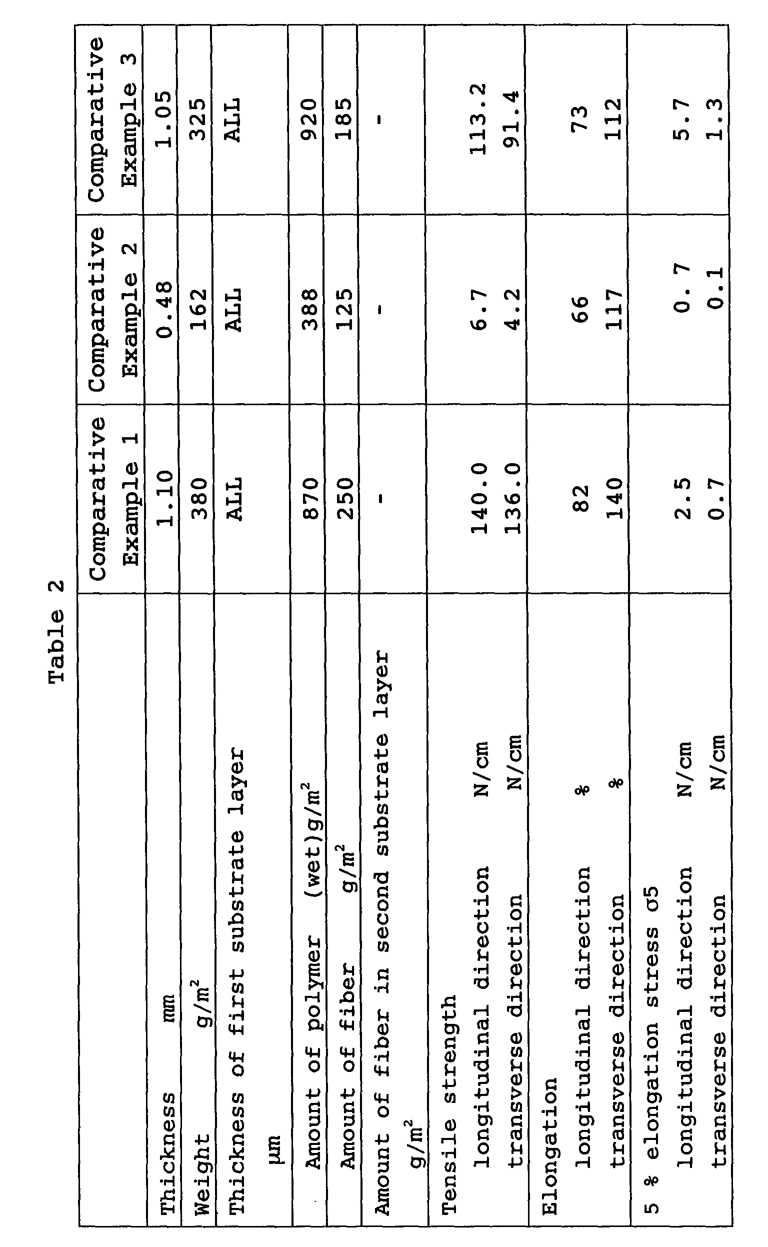

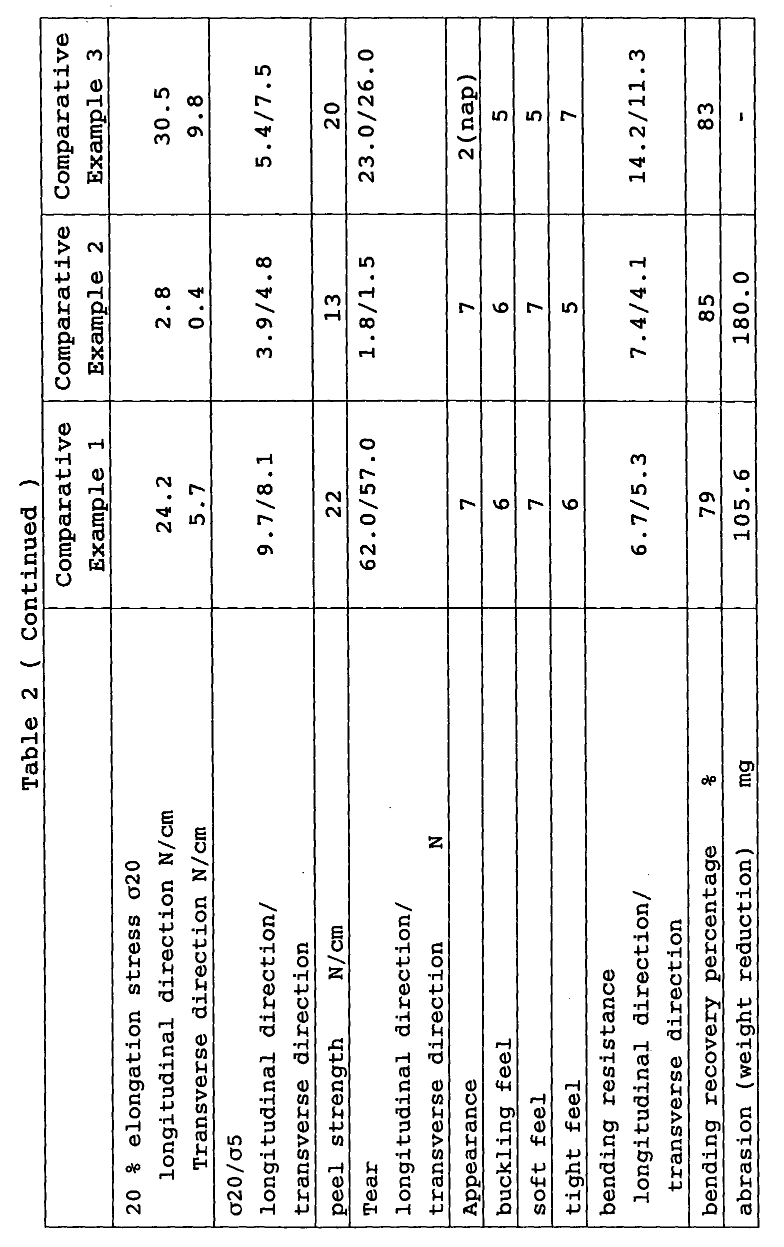

### Example 5

A nonwoven fabric (sheet) having a weight of about 370 g/m², a thickness of 1.4 mm and an apparent density of 0.26 g/cm³ was obtained from the same sea-island type composite fiber consisting of nylon-6 and low-density polyethylene as in Example 1 in the same manner as in Example 1 except that the weight was changed and needle punching was carried out at a rate of 1,000 fibers/cm².

Thereafter, the above nonwoven fabric was impregnated to a wet weight of 920 g/m² with a DMF solution of the elastic polymer (1) (concentration of 15 %) having a 100 % elongation modulus of 1, 080 N/cm², immersed in a 12 % DMF aqueous solution to wet coagulate the elastic polymer, fully washed in 40°C hot water, and dried in the chamber of a hot air drier set at 135°C to obtain a fiber sheet material composed of the sea-island type composite fiber and the porous elastic polymer.

Meanwhile, a solution (1) for forming a film layer containing the same elastic polymer (2) having a 100 % elongation modulus of 325 N/cm² as in Example 4 was applied to release paper (AR-74M, manufactured by Asahi Roll Co., Ltd.) to a coating wet weight of 250 g/m² and laminated with the fiber sheet material composed of the sea-island type fiber and the porous elastic polymer, the resulting laminate was dried at 100° C for 30 seconds, aged at 70° C for 48 hours and left to be cooled for 12 hours, and the release paper was separated from the laminate to obtain a sheet product having a surface layer made of the elastic polymer.

The surface film which was applied to the release paper and dried before it was laminated with the base material had a thickness of 29 µm and a density of 1.3 g/cm³. A film (thickness of 200 µm) of the elastic polymer (2) had a weight reduction of 5.5 wt% after it was immersed in toluene heated at 80° C for 3 minutes and an area expansion coefficient of 113.2 %. The area reduction after toluene was completely removed from the film was 1.2 %, and even when the film was treated in toluene heated at 80°C, its appearance rarely changed.

Thereafter, the sheet product was dipped in toluene heated at 80° C and nipped repeatedly to dissolve and remove the polyethylene component as the sea component of the sea-island type fiber to make fine fibers from the sea-island type fiber. Then toluene contained in the sheet product was removed in 90° C hot water by azeotropy, and the sheet product was dried in the chamber of a hot air drier set at 120° C to obtain a sheet product composed of the fine fibers and the elastic polymers. The area shrinkage factor of the sheet product in the sea component removing step was 4 %.

A polyurethane resin having a 100 % elongation modulus of 350 N/cm² was applied to the surface layer made of the elastic polymer of the obtained sheet product with a 200-mesh gravure roll, and a softening agent was applied to rub the sheet product.

The obtained grain leather-like sheet product was soft and tight and had a surplus feel similar to high-grade natural leather having a grain layer on the surface and an excellent buckling feel. The adhesive and peel strength of the surface was very high at 29 N/cm. When the section of the surface was observed through a microscope, fine fibers constituting the substrate penetrated in the surface layer which was the first substrate layer as a fiber bundle, and the elastic polymer constituting the first substrate layer surrounded the fiber bundle and was not existent in the inside space of the fiber bundle. In the first substrate layer, the fine fibers were substantially not bonded to the elastic polymer and accounted for 50 % of the total space volume of all the voids in the elastic polymer surrounding the fiber bundle. The surface layer made of the elastic polymer was a non-porous solid layer and had an average thickness of 34.8 µm.

The second substrate layer which was the other portion of the sheet product comprising the first substrate layer was composed of an elastic polymer and a bundle of fine fibers , the elastic polymer surrounded the fiber bundle and was not existent in the inside space of the fiber bundle, and the total space area of all the voids in the elastic polymer surrounding the fiber bundle was larger in the second substrate layer than that of the first substrate layer. The first substrate layer and the second substrate layer changed continuously in the direction of thickness in structure. The physical properties of the sheet product are shown in Table 3.

### Example 6

A fiber sheet material composed of a sea-island type composite fiber and a porous elastic polymer was manufactured in the same manner as in Example 5.

Meanwhile, the solution (1) (concentration of 15 %) for forming a film layer of the elastic polymer (2) used in Example 4 was applied to release paper (AR-74M, manufactured by Asahi Roll Co., Ltd.) to a wet weight of 100 g/m² and dried at 100° C for 3 minutes. The obtained film layer of the elastic polymer had an average thickness of 11.5 µm and a density of 1.3 g/cm³.

The same binder solution (1) containing a crosslinked elastic polymer having a 100 % elongation modulus of 245 N/cm² as in Example 4 was applied to the obtained film layer to a coating wet weight of 130 g/m² and laminated with the above base material composed of the sea-island type fiber and the elastic polymer, the resulting laminate was dried at 100°C for 30 seconds, aged at 70° C for 48 hours and left to be cooled for 12 hours, and the release paper was separated from the laminate to obtain a sheet product having a surface layer made of the elastic polymer.

The adhesive layer as the first substrate layer in the surface film which was applied to the release paper and dried before it was laminated with the base material had a thickness of 49 µm and a density of 1.0 g/cm³. A 200 µm-thick film formed from the binder solution (1) used herein had a weight reduction of 2.6 wt% after it was immersed in toluene heated at 80°C for 3 minutes and an area expansion coefficient of 96.0 %. The area change rate after toluene was completely removed from the film was 0.8 %. Thus it could be confirmed that even when the elastic polymer film was treated in toluene heated at 80°C, its appearance rarely changed. When this film was immersed in a DMF solution at 20° C for 30 minutes, its solubility was 5 % or less which means that the film was insoluble.

Thereafter, the obtained sheet product was dipped in toluene heated at 80° C and nipped repeatedly to dissolve and remove the polyethylene component as the sea component of the sea-island type fiber to make fine fibers from the sea-island type fiber. Then toluene contained in the base material was removed in 90° C hot water by azeotropy, and the base material was dried in the chamber of a hot air drier set at 120° C to obtain a sheet product composed of the fine fibers and the elastic polymers. At this point, the area shrinkage factor of the sheet product was 3 %.

A polyurethane resin was applied to the surface of the obtained sheet product with a gravure roll, and a softening agent was applied to rub the sheet product as in Example 5.

The obtained grain leather-like sheet product was soft and had an excellent buckling feel on the surface. The adhesive and peel strength of the surface was very high at 27 N/cm. When the section of the surface was observed through a microscope, the relationship between the fine fibers and the elastic polymer was the same as in Example 5 except that a solid surface layer containing no fibers was existent on the surface of the first substrate layer composed of the fiber and the elastic polymer. The solid surface layer made of the elastic polymer and the first substrate layer were non-porous solid layers and had an average total thickness of 65.3 µm, out of which the solid surface layer was as thick as 11.5 µm and the fist substrate layer was as thick as 53.8 µm. The physical properties of the sheet product are shown in Table 3.

### Example 7

A fiber sheet material composed of a sea-island type composite fiber and a porous elastic polymer was manufactured in the same manner as in Example 5.

Meanwhile, the same solution (1) (concentration of 15 %) for forming a film layer containing the elastic polymer (2) as in Example 4 was applied to release paper (AR-74M, manufactured by Asahi Roll Co., Ltd.) to a wet weight of 60 g/m² and dried at 100° C for 3 minutes. The obtained film layer of the elastic polymer had an average thickness of 6.9 µm and a density of 1.3 g/cm³.

The same binder solution (1) as in Example 4 was applied to the obtained film to a wet weight of 90 g/m² and laminated with the base material composed of the sea-island type fiber and the elastic polymer, the resulting laminate was dried at 100°C for 30 seconds, aged at 70°C for 48 hours and left to be cooled for 12 hours, and the release paper was separated from the laminate to obtain a sheet product having an elastic polymer layer on the surface. The adhesive layer as the first substrate layer in the surface film which was applied to the release paper and dried before it was laminated with the base material had a thickness of 34 µm and a density of 1.0 g/cm³.

Thereafter, the same processing as in Example 6 was carried out to obtain a grain leather-like sheet product. The area shrinkage factor of the sheet product in the polyethylene component removing step was 6 %.

The obtained grain leather-like sheet product was very soft, exhibited a high-grade surplus feel on the surface grain layer and had a good buckling feel. The adhesive and peel strength of the surface was very high at 26 N/cm. When the section of the surface was observed through a microscope, a bundle of fine fibers was existent as in Example 6 and the relationship between the fine fibers and the elastic polymer was the same as in Example 6. The fine fibers and the elastic polymer were substantially not bonded together. The solid surface layer made of the elastic polymer and the first substrate layer were non-porous solid layers and had an average total thickness of 45.0 µm. The solid surface layer was as thick as 6.9 µm and the first substrate layer was as thick as 38.1 µm. The physical properties of the sheet product are shown in Table 3.

### Example 8

A fiber sheet material composed of a sea-island type composite fiber and a porous elastic polymer was manufactured in the same manner as in Example 5.

Meanwhile, an elastic polymer water dispersion (1) was prepared by mixing together a water-dispersible elastic polymer (aqueous self-emulsifiable polyurethane resin, Hydran TMS-172, manufactured by Dainippon Ink and Chemicals, Inc., concentration of 35 wt%), water-dispersible black pigment (DISPERSE HG-950, manufactured by Dainippon Ink and Chemicals, Inc.), water-repellent fine particles S-21 (methylated silica content of 12 %, manufactured by Matsumoto Yushi-Seiyaku Co., Ltd., concentration of 20 wt%), water-repellent fine particles C-10 (methylated silica content of 5.9 %, manufactured by Matsumoto Yushi-Seiyaku Co., Ltd., concentration of 30 %), urethane-based thickener (Hydran WL Asistar T1, manufactured by Dainippon Ink and Chemicals, Inc.) and isocyanate-based crosslinking agent (Hydran WL Asistar C3, manufactured by Dainippon Ink and Chemicals, Inc.) in a weight ratio of 100/5/30/20/1/4 (parts by weight). This water dispersion (1) was applied to release paper (AR-144SM, thickness of 0. 25 mm, manufactured by Asahi Roll Co., Ltd.) to a coating wet thickness of 300 µm and pre-dried at 70° C for 3 minutes. At this point, this film had a water content of 60 wt%. The film was then dried at 95°C for 3 minutes and at 120°C for 10 minutes to obtain a porous sheet comprising the elastic polymer and having a thickness of 0.10 mm, a weight of 59 g/m² and a density of 0.59 g/cm³ and many independent pores.

Thereafter, an elastic polymer water dispersion (2) was prepared by mixing together a water-dispersible elastic polymer (aqueous polyurethane resin, Hydran TMA-168, manufactured by Dainippon Ink and Chemicals, Inc., concentration of 45 wt%), water-dispersible black pigment (DISPERSE HG-950), urethane-based thickener (Hydran WL Asistar T1) and isocyanate-based crosslinking agent (Hydran WL Asistar C3) in a weight ratio of 100/5/1/10 (parts by weight). This water dispersion (2) was applied to the porous sheet obtained from the water dispersion (1) to a coating wet thickness of 150 µm and a dry weight of 60 g/m². After application, the sheet was pre-dried at 70°C for 2 minutes and laminated with the base material composed of the sea-island type fiber and the elastic polymer, the release paper side of the resulting laminate was brought into contact with a heat cylinder (surface temperature of 130°C) to be heated for 15 seconds, and the laminate was thermally nipped with the heat cylinder at a clearance of 1.0 mm and further cured at 120° C for 2 minutes. After the laminate was aged at 50° C for 24 hours, the release paper was separated from the laminate to obtain a sheet product having a surface layer made of the elastic polymer on the surface. The adhesive layer as the first substrate layer in the surface film which was applied to the release paper and dried before it was laminated with the base material had a thickness of 46 µm and a density of 1.3 g/cm³.

Thereafter, the obtained sheet product was dipped in toluene heated at 80° C and nipped repeatedly to dissolve and remove the polyethylene component as the sea component of the sea-island type fiber to make fine fibers from the sea-island type fiber. Then toluene contained in the base material was removed in 90° C hot water by azeotropy, and the sheet product was dried in the chamber of a hot air drier set at 120° C to obtain a sheet product composed of the fine fibers and the elastic polymers. At this point, the area shrinkage factor of the sheet product was 7 %.

A polyurethane resin was applied to the surface of the obtained sheet product with a gravure roll, and a softening agent was applied to rub the sheet product as in Example 5.

The obtained grain leather-like sheet product was soft and tight and had an excellent buckling feel on the grain surface layer. The adhesive and peel strength of the surface was very high at 25 N/cm. When the section of the surface was observed through a microscope, a bundle of fine fibers was existent and the fine fibers and the elastic polymer were substantially not bonded to each other as in Example 6. The elastic polymer film layer made from the water dispersion (1) in which the fiber bundle did not penetrate was porous whereas the elastic polymer adhesive layer (first substrate layer) made from the water dispersion (2) in which the fiber bundle penetrated was not porous, and the average total thickness of the entire surface layer was 154.5 µm. The film layer was as thick as 100 µm and the first substrate layer was as thick as 54.5 µm. The physical properties of the sheet product are shown in Table 3.

### Comparative Example 4

A fiber sheet material composed of a sea-island type fiber and a porous elastic polymer was manufactured in the same manner as in Example 5.

Thereafter, the obtained base material having no surface layer was dipped in toluene heated at 80° C and nipped repeatedly to dissolve and remove the polyethylene component as the sea component of the sea-island type fiber so as to make fine fibers from the sea-island type fiber. Then toluene contained in the base material was removed in 90° C hot water by azeotropy, and the base material was dried in the chamber of a hot air drier set at 120° C to obtain a sheet product for use as a base material composed of the fine fibers and the elastic polymer and having no elastic polymer layer on the surface.

Meanwhile, the same solution (1) for forming a film layer (concentration of 15 %) as in Example 4 was applied to release paper (AR-74M) to a wet weight of 130 g/m² and dried at 100° C for 3 minutes. The obtained elastic polymer film layer had an average thickness of 15.0 µm and a density of 1.3 g/cm³.

The same binder solution (1) as in Example 4 was applied to the obtained film to a wet weight of 100 g/m² and laminated with the above sheet product for use as a base material composed of the fine fibers and the elastic polymer, the resulting laminate was dried at 100°C for 30 seconds, aged at 70° C for 48 hours and left to be cooled for 12 hours, and the release paper was separated from the laminate to obtain a sheet product having an elastic polymer layer on the surface. The adhesive layer as the first substrate layer in the surface film which was applied to the release paper and dried before it was laminated with the base material had a thickness of 37.7 µm and a density of 1.0 g/cm³.

A polyurethane resin having a 100 % elongation modulus of 350 N/cm² was applied to the surface having a surface layer of the obtained sheet product with a 200-mesh gravure roll, and a softening agent was applied to rub the sheet product.

The obtained grain leather-like sheet product had a stretchy feel on the surface and was hard though it had an excellent buckling feel. The adhesive and peel strength of the surface was a little low at 18 N/cm. When the section of the surface was observed through a microscope, although some of the fine fibers in the surface layer were existent as a fiber bundle, the elastic polymer penetrated in the bundle of fine fibers and accordingly, the fiber and the elastic polymer were bonded together. The elastic polymer constituting the surface layer had a non-porous structure and an average thickness of 56.5 µm. The physical properties of the obtained sheet product are shown in Table 3.

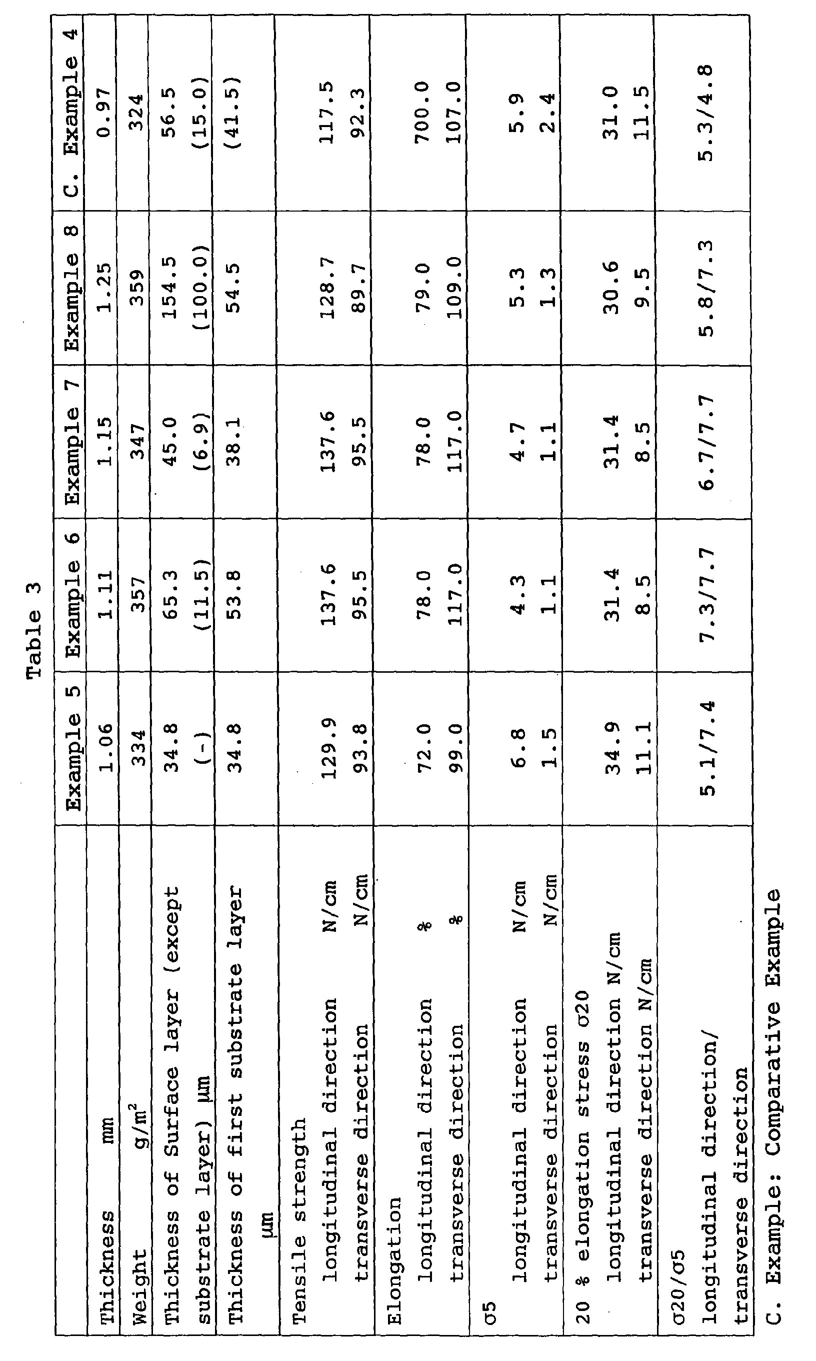

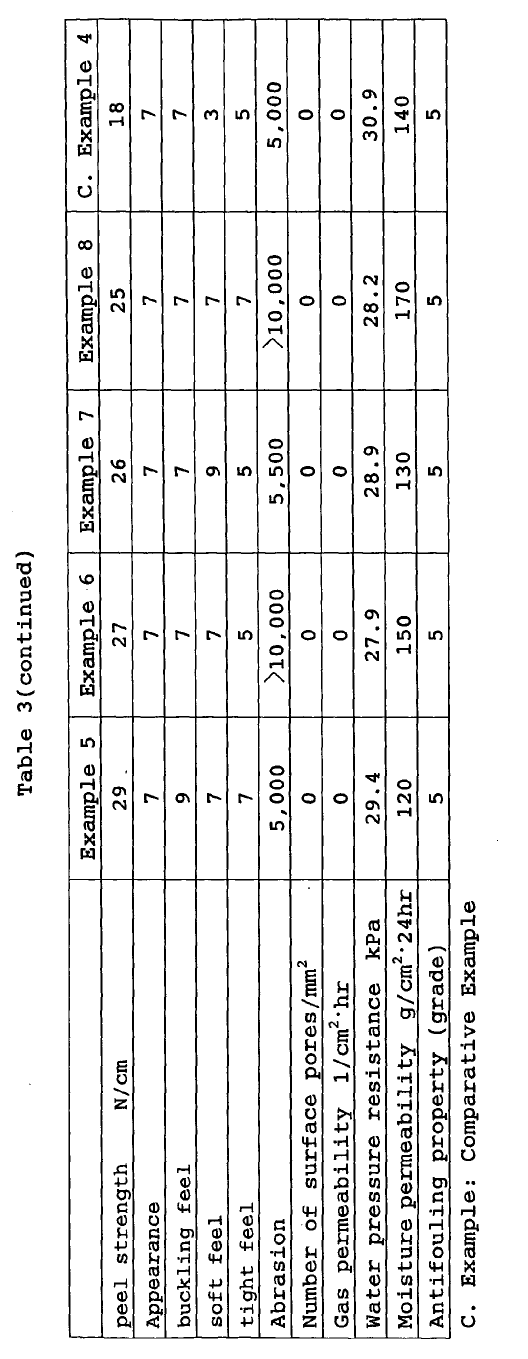

### Example 9

A fiber sheet material composed of a sea-island type fiber and a porous elastic polymer was manufactured in the same manner as in Example 5 except that a sea-island composite fiber of 8.8 dtex was used.

Meanwhile, the same solution (1) for forming a film layer (concentration of 15 %) containing an elastic polymer (2) as in Example 4 was used as an elastic polymer solution for forming a solid layer.

A solution (2) for forming a film layer was prepared by dispersing 20 parts of polyethylene fine powders (Flocene UF-80 having an intermediate particle size of 20 to 30 µm) in a solution containing 100 parts of the same elastic polymer (2) having a 100 % elongation modulus of 325 N/cm² as in Example 4, 40 parts of DMF and 60 parts of methyl ethyl ketone as an elastic polymer solution for forming a porous layer.

The same binder solution (1) containing a crosslinked polyurethane resin having a 100 % elongation modulus of 245 N/cm² as in Example 4 was used as a solution for forming a binder layer.

The solution (1) for forming a film layer was applied to release paper (AR-74M, manufactured by Asahi Roll Co., Ltd.) to a coating wet weight of 100 g/m² and dried at 70° C for 3 minutes to ensure that the solid layer had a theoretical thickness of 12.0 µm. A solution (2) for forming a film layer containing the elastic polymer (2) which does not dissolve in toluene but expands well in toluene was applied to the above solid layer to a coating wet weight of 100 g/m² and dried at 70° C for 3 minutes to ensure that the porous layer had a theoretical thickness of 12.0 µm. The binder solution (1) for adhesion was applied to the porous layer to a coating wet weight of 130 g/m² to ensure that the binder layer had a theoretical thickness of 49.0 µm and laminated with the above fiber sheet material, the resulting laminate was dried at 100° C for 30 seconds, aged at 70° C for 48 hours and left to be cooled for 12 hours, and the release paper was separated from the laminate to obtain a base material having a three-layer surface structure consisting of a first solid layer, a second layer containing the polyethylene fine particles and a binder layer of the elastic polymer in the mentioned order from the front surface side.

The obtained base material having a three-layer surface structure was dipped in toluene heated at 80° C and nipped repeatedly to dissolve and remove the low-density polyethylene component as the sea component of the composite fiber to make fine fibers from the composite fiber and to dissolve and remove the polyethylene fine powder component dispersed in the elastic polymer layer to make the second layer porous. Thereafter, toluene contained in the base material was removed in 90° C hot water by azeotropy, the base material was dried in the chamber of a hot air drier set at 120° C, and a softening agent and a water repelling agent were applied to rub the base material, thereby obtaining a soft grain leather-like sheet product having an excellent buckling feel on the surface.

It was confirmed from an electron microphotograph of the surface of the base material that the obtained grain leather-like sheet product had 84 pores having an average diameter of 3.2 µm per unit area (1 mm²) on the surface. It was also confirmed from an electron microphotograph of the section of the base material that the ratio of the diameter of the circumscribed circle to the diameter of the inscribed circle of each pore open in the surface layer was in the range of 1.1 to 1.7. This sheet was soft and had an excellent buckling feel on the surface. It was confirmed that this sheet had high water pressure resistance and did not transmit air and water though it had low gas permeability. It could be confirmed that this sheet had excellent moisture permeability so that it hardly let water from the surface penetrate therein and transmitted moisture from the inside to the surface. The antifouling properties of the surface of this base material were so high that the surface was hardly stained. The physical properties of the obtained grain leather-like sheet product are shown in Table 4.

### Example 10

A leather-like sheet product was manufactured in the same manner as in Example 9 except that a binder solution (2) prepared by dispersing 10 parts of the UF-80 polyethylene fine powder into a solution containing 20 parts of the Crisbon TA265 elastic polymer obtained by mixing polyethylene fine powders with the binder solution (1) of Example 4, 80 parts of the Crisbon TA290 elastic polymer, 15 parts of Colonate L, 3 parts of Crisbon Accel T and 10 parts of dimethylformamide was used as a solution for forming a binder layer in place of the binder solution (1) of Example 4.

It was confirmed from an electron microphotograph of the surface of the base material that the obtained grain leather-like sheet product had 93 pores having an average diameter of 3.6 µm per unit area (1 mm²) on the surface. It was also confirmed from an electron microphotograph of the section of the base material that the ratio of the diameter of the circumscribed circle to the diameter of the inscribed circle of each pore in the surface layer was in the range of 1.1 to 1.6. This sheet had a thickness of 1.24 mm and a weight of 436 g/cm² and was soft and an excellent buckling feel on the surface. The physical properties of the obtained grain leather-like sheet product are shown in Table 4.

### Example 11

A leather-like sheet product having a three-layer surface structure was manufactured in the same manner as in Example 9 and Example 10 except that the solution (2) for forming a film layer as a porous layer in Example 9 was used in place of the solution (1) for forming a film layer as a solid layer in Example 9 as a solution for a first layer and the binder solution (2) containing polyethylene fine powders of Example 10 was used as a solution for forming a third layer.

It was confirmed from an electron microphotograph of the surface of the base material that the obtained grain leather-like sheet product had 1,000 or more pores having an average diameter of 5 µm or more per unit area (1 mm²) on the surface. It was also confirmed from an electron microphotograph of the section of the base material that the first layer was a porous layer. This leather-like sheet product was soft and had an excellent buckling feel on the surface. The base material had excellent gas permeability and moisture permeability. When shoes manufactured from this base material were put on, the insides of the shoes hardly became stuffy. The physical properties of the obtained grain leather-like sheet product are shown in Table 4.

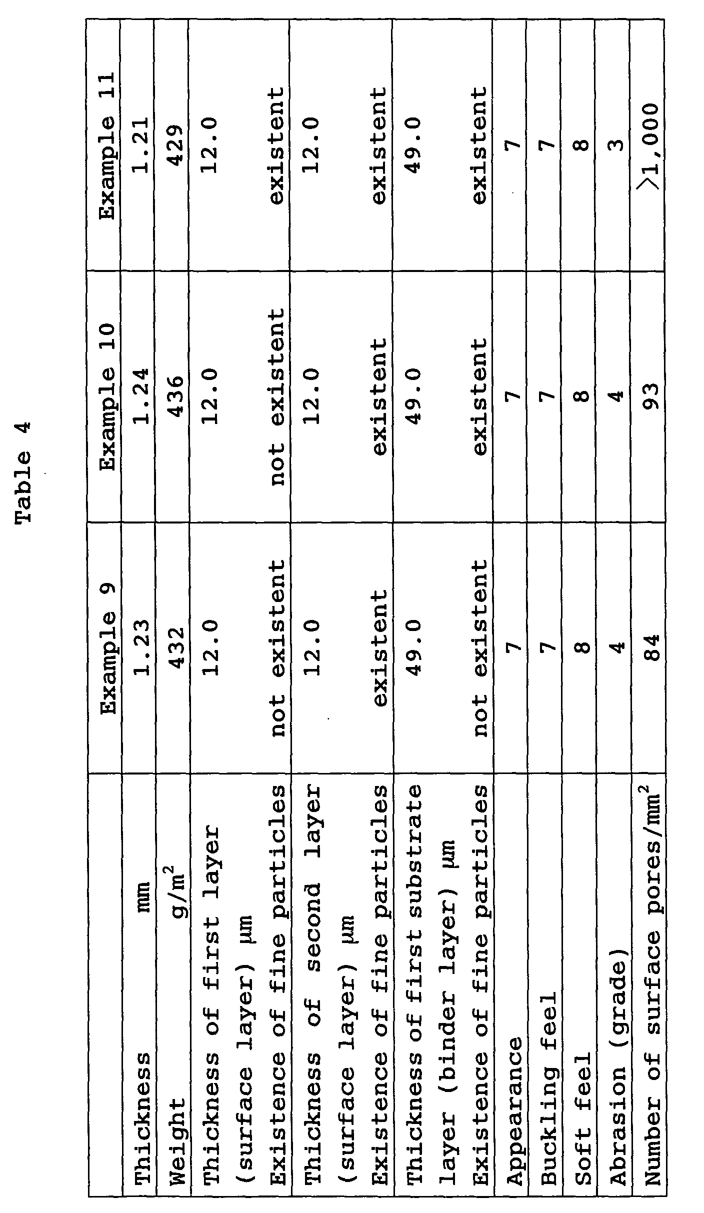

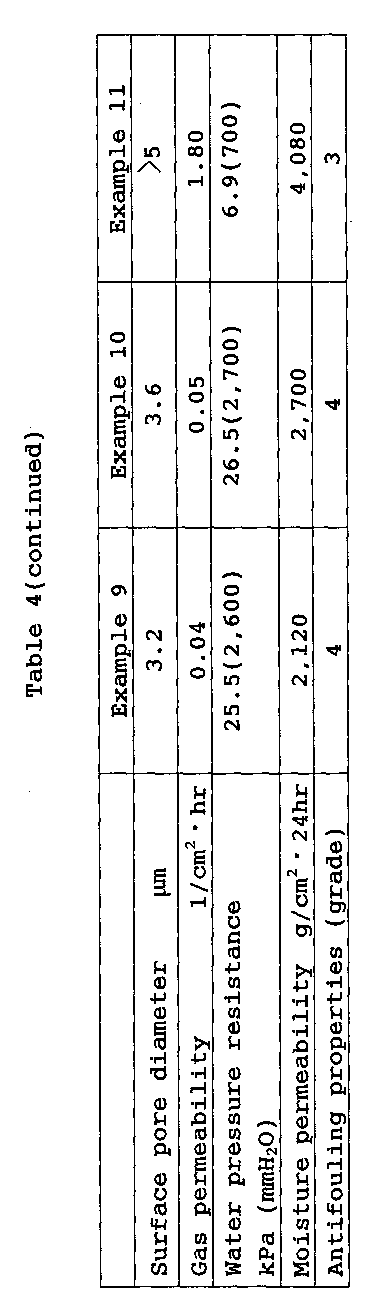

## Claims

1. A leather-like sheet product comprising a substrate which contains a bundle of fine fibers, wherein
the substrate comprises (1) a first substrate layer having a structure that it is composed of an elastic polymer and a bundle of fine fibers and the elastic polymer surrounds the fiber bundle and is not existent in the inside space of the fiber bundle and (2) a second substrate layer (A) having a structure that it is essentially composed of a bundle of fine fibers, and (3) the structure of the first substrate layer and the structure of the second substrate layer (A) change continuously in the direction of thickness.

2. The leather-like sheet product according to claim 1, wherein the second substrate layer (A) is essentially composed of an elastic polymer and a bundle of fine fibers.

3. The leather-like sheet product according to claim 1, wherein a solid surface layer, a porous surface layer or a composite surface layer consisting of a solid layer and a porous layer is formed on the surface on the first substrate layer side of the sheet product.

4. The leather-like sheet product according to claim 3, wherein the surface layer has a thickness of 1 to 200 µm.

5. The leather-like sheet product according to claim 1, wherein the surface on the first substrate layer side is a suede-like surface.

6. The leather-like sheet product according to claim 1, wherein the total thickness of the first substrate layer and the second substrate layer (A) is 0.2 to 5 mm.

7. The leather-like sheet product according to claim 1, wherein the fiber bundle accounts for 40 to 80 % of the total space area of all the voids in the elastic polymer surrounding the fiber bundle of the first substrate layer in the section perpendicular to the surface of the leather-like sheet product.

8. The leather-like sheet product according to claim 1, wherein the weight ratio of the bundle of fine fibers to the elastic polymer in the first substrate layer is 10:90 to 50:50.

9. The leather-like sheet product according to claim 1, wherein the bundle of fine fibers is an assembly of 10 to 10,000 fine fibers having an average fineness of 0.0001 to 0.1 dtex.

10. The leather-like sheet product according to claim 1, wherein the elastic polymer in the first substrate layer is a polyurethane having a solubility in toluene of 15 wt% or less.

11. The leather-like sheet product according to claim 1, wherein the elastic polymer in the first substrate layer is a porous elastic material.

12. A process for producing a leather-like sheet product, comprising the steps of:
applying a solution of an elastic polymer to one side of a sheet substantially composed of a fine fiber forming sea-island type fiber consisting of two or more components which differ from each other in solvent solubility to form an impregnated layer;
coagulating the elastic polymer; and
dissolving and removing the sea component by using a solvent which can dissolve the sea component of the sea-island type fiber.

13. The process for producing a leather-like sheet product according to claim 12, wherein the elastic polymer is coagulated by a dry process.

14. A process for producing a leather-like sheet product, comprising the steps of:
applying a solution of an elastic polymer to both sides of a sheet substantially composed of a fine fiber forming sea-island type fiber consisting of two or more components which differ from each other in solvent solubility to form impregnated layers in such a manner that a non-impregnated layer is existent in the center portion of the sheet;
coagulating the elastic polymer;
dissolving and removing the sea component by using a solvent which can dissolve the sea component of the sea-island type fiber; and
slicing the sheet into two at the non-impregnated layer.

15. The process for producing a leather-like sheet product according to claim 12, wherein the elastic polymer is a polyurethane having a solubility in toluene of 15 wt% or less.

16. The process for producing a leather-like sheet product according to claim 14, wherein the elastic polymer is a polyurethane having a solubility in toluene of 15 wt% or less.

17. A leather-like sheet product comprising a substrate which contains a bundle of fine fibers, wherein
the substrate comprises (1) a first substrate layer having a structure that it is composed of an elastic polymer and a bundle of fine fibers and the elastic polymer surrounds the fiber bundle and is not existent in the inside space of the fiber bundle and (2) a second substrate layer (B) having a structure that it is composed of an elastic polymer and a bundle of fine fibers, the elastic polymer surrounds the fiber bundle and is not existent in the inside space of the fiber bundle, and the total space area of all the voids in the elastic polymer surrounding the fiber bundle is larger than that of the first substrate layer, and (3) the structure of the first substrate layer and the structure of the second substrate (B) layer change continuously in the direction of thickness.

18. The leather-like sheet product according to claim 17, wherein a solid surface layer, a porous surface layer or a composite surface layer consisting of a solid layer and a porous layer is formed on the surface of the first substrate layer.

19. The leather-like sheet product according to claim 18, wherein the surface layer has a thickness of 1 to 200 µm.

20. The leather-like sheet product according to claim 17, wherein the surface of the first substrate layer is a suede-like surface.

21. The leather-like sheet product according to claim 17, wherein the total thickness of the first substrate layer and the second substrate layer is 0.2 to 5 mm.

22. The leather-like sheet product according to claim 17, wherein the fiber bundle accounts for 40 to 80 % of the total space area of all the voids in the elastic polymer surrounding the fiber bundle of the first substrate layer in the section perpendicular to the surface of the leather-like sheet product.

23. The leather-like sheet product according to claim 17, wherein the fiber bundle accounts for less than 40 % of the total space area of all the voids in the elastic polymer surrounding the fiber bundle of the second substrate layer in the section perpendicular to the surface of the leather-like sheet product.

24. The leather-like sheet product according to claim 17, wherein the weight ratio of the bundle of fine fibers to the elastic polymer in the first substrate layer is 10:90 to 50:50.

25. The leather-like sheet product according to claim 17, wherein the bundle of fine fibers is an assembly of 10 to 10,000 fine fibers having an average fineness of 0.0001 to 0.1 dtex.

26. The leather-like sheet product according to claim 17, wherein the elastic polymer of the first substrate layer is a polyurethane having a solubility in toluene of 15 wt% or less.

27. The leather-like sheet product according to claim 17, wherein the elastic polymer of the first substrate layer is a porous elastic material.

28. A process for producing a leather-like sheet product, comprising the steps of:
impregnating a sheet composed of a fine fiber forming sea-island type fiber consisting of two or more components which differ from each other in solvent solubility with a solution of an elastic polymer (a);
coagulating the elastic polymer to form a fiber sheet material;
forming a surface layer composed of an elastic polymer (b) surrounding the sea-island type fiber in the surface layer without a space therebetween on the surface of the sheet material; and
dissolving and removing the sea component by using a solvent which can dissolve the sea component of the sea-island type fiber.

29. The process for producing a leather-like sheet product according to claim 28, wherein the elastic polymers (a) and (b) are each a polyurethane having a solubility in toluene of 15 wt% or less.

30. The process for producing a leather-like sheet product according to claim 28, wherein the elastic polymers (a) and (b) have an area change rate by toluene of their films of 5 % or less.

31. The process for producing a leather-like sheet product according to claim 28, wherein the surface layer made of the elastic polymer (b) on the surface of the fiber sheet material is formed by lamination.
